# FASCICULE DE BREVET EUROPEEN

(11) **EP 3 662 322 B1**
(45) Date de publication et mention de la délivrance du brevet: **09.06.2021**
(21) Numéro de dépôt: 18758928.8
(22) Date de dépôt: 25.07.2018
(51) Int. Cl.: G02F 1/1334, G02F 1/1337

(54) **DISPOSITIF ELECTROCOMMANDABLE A DIFFUSION VARIABLE PAR CRISTAUX LIQUIDES**
ELEKTRISCH STEUERBARE VORRICHTUNG MIT VARIABLER DIFFUSION DURCH FLÜSSIGKRISTALLE
ELECTRICALLY CONTROLLABLE DEVICE WITH VARIABLE DIFFUSION BY LIQUID CRYSTALS

(30) Priorité: 31.07.2017 FR 1757295
(43) Date de publication de la demande: 10.06.2020
(73) Titulaire: SAINT-GOBAIN GLASS FRANCE, 92400 Courbevoie (FR)
(72) Inventeur: DIGUET, Antoine, 75009 Paris (FR); LOUIS, Benoit, 93200 Saint Denis (FR)
(74) Mandataire: Saint-Gobain Recherche
(86) Numéro de dépôt international: PCT/FR2018/051905
(87) Numéro de publication internationale: WO 2019/025702

(56) Documents cités:
- EP-A1- 0 821 260
- US-A- 4 472 028

## Description

L'invention concerne un dispositif électrocommandable à diffusion variable par cristaux liquides, doté entre deux électrodes d'une couche de cristaux liquides alternant de manière réversible entre un état transparent et un état diffusant, par application d'un champ électrique alternatif.

On connait des vitrages dont certaines caractéristiques peuvent être modifiées sous l'effet d'une alimentation électrique appropriée, tout particulièrement la transmission, l'absorption, la réflexion dans certaines longueurs d'ondes du rayonnement électromagnétique, notamment dans le visible et/ou dans l'infrarouge, ou encore la diffusion lumineuse.

Le vitrage électrocommandable à cristaux liquides peut être utilisé partout, tant dans le secteur de la construction que dans le secteur de l'automobile, chaque fois que la vue à travers le vitrage doit être empêchée à des moments donnés.

Les électrodes communément utilisées sont en oxyde mixte d'indium et d'étain (ITO en anglais). Pour se prémunir des court circuits générés par des impuretés conductrices de taille supérieure ou égale à la distance entre les électrodes, chacune des couches ITO peut être revêtue d'une ou plusieurs couches diélectriques d'oxydes ou de nitrures telles que Si₃N₄, SiO₂, comme évoqué dans le document WO2014/072596 d'épaisseur cumulée de 50 à 150nm.

Des dispositifs électrocommandes à cristaux liquides comportant des couches barrières d'épaisseur d'au moins 30nm sont également connus des documents US4472028 et EP0821260 A1.

Un objet de l'invention consiste à développer un dispositif électrocommandable à cristaux liquides encore plus fiable, sans pénaliser ses propriétés optiques et électriques.

A cet effet, la présente invention propose d'abord un dispositif électrocommandable à diffusion variable par cristaux liquides comportant un empilement de couches dans cet ordre :
- une première électrode de préférence transparente comportant (voire constituée de) une première couche électroconductrice (monocouche ou multicouche) notamment minérale en particulier d'au plus 200nm,
- une couche électroactive contenant (voire constituée de) des cristaux liquides et des espaceurs (transparents, notamment plastique, verre) de préférence dans une matière (matrice) polymère (organique), notamment alternant de manière réversible entre un état diffusant (état off) et un état transparent (état on) par application d'un champ électrique alternatif, la couche active étant d'épaisseur E₀ micronique notamment de 3 à 45µm et même de 5 à 40µm voire même de 5 ou 8µm à 30µm
- une deuxième électrode de préférence transparente comportant (voire constituée de) une deuxième couche électroconductrice (monocouche ou multicouche) notamment minérale en particulier d'au plus 200nm
   à l'état transparent, la couche électroactive étant visible par transparence côté première électrode et/ou côté deuxième électrode.

L'empilement comprend entre la première électrode et la couche électroactive une première couche barrière polymérique (oraganique), transparente, d'épaisseur E₁ et éventuellement entre la deuxième électrode et la couche électroactive une deuxième couche barrière polymérique (organique) transparente d'épaisseur E₂, E₁ étant non nulle et d'au moins 1µm, et E1+E2 étant d'au plus 40µm et même d'au plus 30µm.

La première couche barrière polymérique est porteuse de la première électrode sur une première face principale extérieure orientée côté opposé à la couche électroactive ou la première électrode est sur une première face principale dite interne d'un premier substrat diélectrique de préférence transparent (surtout si la première électrode est transparente) orientée vers la couche électroactive.

Et la deuxième couche barrière polymérique éventuelle est porteuse de la deuxième électrode sur une deuxième face principale extérieure orientée côté opposé à la couche électroactive ou la deuxième électrode est sur une deuxième face principale dite interne d'un deuxième substrat diélectrique de préférence transparent (surtout si la deuxième électrode est transparente) orientée vers la couche électroactive, (le cas échéant au moins le premier ou le deuxième substrat qui du côté où la couche électroactive est visible à l'état transparent, étant transparent).

De manière surprenante, la ou les deux couches barrières polymériques selon l'invention sont suffisamment épaisses pour protéger des courts circuits sans élever la tension de commutation trop fortement en particulier car on a limité l'épaisseur E1+E2.

La couche barrière polymérique selon l'invention ne réduit pas la transmission de la lumière ni ne génère de défauts optiques ou autres hétérogénéités par exemple rencontrées sur des couches minérales obtenues par dépôts de pulvérisationmagnétron. La couche barrière polymérique peut donc réduire plus efficacement les courts circuits que les couches minérales de l'art antérieur.

Une couche polymérique (organique) est en outre bas cout et aisément plus épaisse (et de bonne qualité) qu'une couche minérale.

La première couche barrière polymérique (et même respectivement la deuxième éventuelle couche barrière polymérique) selon l'invention avec ou sans revêtement ou traitement de surface est de préférence en contact avec la couche électroactive et même avec la première électrode (respectivement avec la deuxième électrode).

La première couche barrière polymérique (et même la deuxième éventuelle couche barrière polymérique) selon l'invention peut être un film ou un dépôt. La première couche barrière polymérique (et même la deuxième éventuelle couche barrière polymérique) selon l'invention peut être monocouche ou multicouche (par exemple par coextrusion de polymères -organiques-), avec ou sans traitement chimique de surface.

La surface de la première couche barrière polymérique côté première électrode peut être lisse ou au moins peu rugueuse. On préfère limiter les rugosités (par exemple rugosité rms d'au plus 20nm) en particulier si cette couche est un film porteur de la première électrode (par dépôt sur le film, par exemple par dépôt physique ou chimique en phase vapeur PVD ou CVD).

La surface de la première couche barrière polymérique côté couche électroactive peut être lisse ou au moins peu rugueuse. On préfère limiter les rugosités (par exemple rugosité rms d'au plus 20nm) pour éviter des hétérogénéités (zone plus diffusante et/ou moins transparente etc).

Dans un premier mode de réalisation préféré tant pour la simplicité d'assemblage que pour avoir une épaisseur calibrée, la première couche barrière polymérique est un premier film transparent à base de matière polymérique choisie parmi un polyester, en particulier un polyéthylène téréphtalate (PET), un polyéthylène naphtalate (PEN), un polycarbonate (PC), un polyoléfine comme un polyéthylène (PE), un polypropylène (PP), un polyuréthane, un polyamide, un polyimide ou encore un polymère fluoré tel que l'éthylène tétrafluoroéthylène (ETFE), l'éthylène de chlorotrifluoréthylène (ECTFE), le polyfluorure de vinylidène (PVDF), le polychlorotrifluoréthylène (PCTFE) et les copolymères éthylène-propylène fluorés (FEP). Et de préférence la deuxième couche barrière polymérique éventuelle est un deuxième film transparent en matière polymérique choisie parmi un polyester, en particulier un polyéthylène téréphtalate (PET), un polyéthylène naphtalate (PEN), un polycarbonate, un polyoléfine comme un polyéthylène (PE), un polypropylène (PP), un polyuréthane, un polyamide, un polyimide ou un polymère fluoré tel que l'éthylène tétrafluoroéthylène (ETFE), l'éthylène de chlorotrifluoréthylène (ECTFE), le polyfluorure de vinylidène (PVDF), le polychlorotrifluoréthylène (PCTFE) et les copolymères éthylène-propylène fluorés (FEP). On préfère choisir deux films de même matière ou au moins matrice polymérique. La teinte par contre peut varier.

On préfère le PET par sa transparence, sa qualité de surface, sa résistance mécanique, sa disponibilité, à toute tailles.

L'absorption de ce film transparent selon l'invention notamment de PET est de préférence de moins de 0,5% ou même d'au plus 0,2% et avec un flou de moins de 1.5% et même d'au plus 1%.

Le film barrière selon l'invention peut être en retrait du chant du premier substrat, de la même taille ou s'étendre au-delà du chant du premier substrat sur un côté, deux, trois côtés, ou quatre côtés.

Le film barrière selon l'invention peut faciliter la connexion électrique de la première électrode.

On préfère un film barrière selon l'invention de moins de 15µm mais on peut choisir un film selon l'invention de 25µm pour simplifier la planéité.

En particulier dans une configuration a) de ce premier mode, la première couche barrière polymérique peut être un film transparent d'épaisseur E1 non nulle d'au plus 25µm et de préférence d'au moins 2µm ou même d'au moins 5µm et la deuxième couche barrière polymérique est absente (d'épaisseur E2 nulle) -donc la deuxième électrode est en contact avec la couche électroactive. En particulier la première électrode (monocouche ou multicouche, notamment (couche diélectrique)/ couche électroconductrice/ (couche diélectrique) peut être en contact avec le premier film. On peut choisir une épaisseur aisément disponible comme 12µm pour le PET.

En particulier dans une configuration b) de ce premier mode, la première couche barrière polymérique est un film transparent d'épaisseur non nulle E1 d'au plus 25µm et même d'au plus 15µm ou 10µm, de préférence d'au moins 2µm ou même d'au moins 5µm et la deuxième couche barrière polymérique est un film transparent d'épaisseur E2 non nulle d'au plus 15µm ou 10µm et de préférence d'au moins 2µm ou même d'au moins 5µm et même E1 et E2 (non nulle) sont d'au plus 20µm.

Dans un deuxième mode de réalisation de la couche barrière, on choisit un dépôt (obtenu par voie liquide) au lieu d'un film de préférence d'épaisseur de moins de 10µm. Aussi, le premier substrat diélectrique est transparent et porteur de la première électrode et de la première couche barrière polymérique qui (est un dépôt et) est choisie parmi les polymères suivants : polyacrylate, polyester, polyuréthane, polyamide, polyéthylène, polyalcool, polyvinylpyrrolidone, polycarbonate, polystyrène, polymère cellulosique, latex synthétique.

Et éventuellement le deuxième substrat diélectrique est transparent et porteur de la deuxième électrode et de la deuxième couche barrière polymérique optionnelle de préférence d'épaisseur de moins de 10µm qui est (un dépôt et) est choisie parmi les polymères suivants : polyacrylate, polyester, polyuréthane, polyamide, polyéthylène, polyalcool, polyvinylpyrrolidone, polycarbonate, polystyrène, polymère cellulosique, latex synthétique.

On peut utiliser tout moyen connu de dépôt par voie liquide.

Dans une réalisation (avec une première couche barrière polymérique film ou dépôt), le premier substrat diélectrique est transparent et porteur de la première électrode qui est transparente et choisi parmi une première feuille de verre ou une première feuille polymérique transparente avec côté première face externe opposée à la première face interne une éventuelle première couche anti-rayures surtout s'il s'agit d'une surface libre (notamment sans film plastique ou vitrage de protection, non feuilleté, ni assemblé dans un double ou triple vitrage).

Et éventuellement (avec une deuxième couche polymérique film ou dépôt) le deuxième substrat diélectrique est transparent et porteur de la deuxième électrode est choisi parmi une deuxième feuille de verre ou une deuxième feuille polymérique transparente avec côté deuxième face externe opposée à la deuxième face interne, une éventuelle deuxième couche anti-rayures surtout s'il s'agit d'une surface libre notamment sans film plastique ou vitrage de protection, non feuilleté, ni assemblé dans un double ou triple vitrage).

La (première et/ou deuxième) couche anti-rayures (« hard coat » en anglais) est par exemple une couche organique, polymérique par exemple à base d'acrylate (éventuellement avec des nano ou microparticules d'oxydes inorganiques) ou même une couche minérale (dépôt PVD ou CVD, sol-gel) par exemple ou nitrures et/ou oxydes métalliques ou de silicium.

Sur le premier substrat diélectrique, la première électrode de préférence transparente peut être minérale, notamment la couche électroconductrice minérale est à base d'un ou plusieurs oxydes conducteurs transparents ou une couche métallique d'au plus 20nm de préférence au sein d'un empilement de couches minces d'oxydes et/ou de nitrures métalliques ou de silicium.

Pour renforcer le contact entre première électrode et premier film polymérique, le dispositif peut comporter entre la première électrode minérale et le premier film polymérique transparente une couche dite d'adhésion transparente polymérique qui est électroconductrice ou qui est diélectrique et d'épaisseur E3 d'au plus 10µm et même d'au plus 5 ou 2µm (de préférence tel que E1+E2+E3 est d'au plus 40µm ou même d'au plus 30µm), en particulier une couche adhésive notamment sensible à la pression.

Par exemple, la couche d'adhésion est (un dépôt) à base d'un ou des polymères conducteurs de l'une au moins des familles suivantes :
- la famille des polythiophènes, comme le PEDOT (3,4-polyéthylenedioxythiopène), le PEDOT/PSS c'est-à-dire le (3,4-polyéthylènedioxythiopène mélangé avec polystyrènesulfonate, et tout autre dérivé comme décrit dans la demande US2004253439,
- ou encore les poly(acétylène)s, poly(pyrrole)s, poly(aniline)s, poly(fluorène)s, poly(3-alkyl thiophène)s, polytétrathiafulvalènes, polynaphthalènes, poly(p-phénylène sulfide), et poly(para-phénylène vinylène)s.

Pour les polythiophènes, on peut choisir par exemple le produit commercialisé par la société HC Strack sous le nom de BAYTRON® ou encore par la société Agfa sous le nom d'Orgacon®, ou d'Orgacon EL-P3040®.

La première couche d'adhésion diélectrique (et/ou la deuxième éventuelle) peut être une feuille d'adhésif sensible à la pression.

La couche d'adhésion diélectrique (non adhésive) peut être par exemple un gel en particulier un hydrogel à base de polyacrylamide, polyvinyl alcool, polyuréthane, polysaccharide, polyéthylène glycol, acide polylactique, silicone.

La couche d'adhésion diélectrique peut même être un adhésif sensible à la pression. Un adhésif sensible à la pression, abrégé PSA et communément appelé auto-adhésif, est un adhésif qui forme une liaison lorsqu'une pression lui est appliquée de manière à solidariser l'adhésif avec la surface à coller. Aucun solvant, ni d'eau, ou de chaleur n'est nécessaire pour activer l'adhésif. Il est utilisé dans des garnitures d'automobile, et dans une grande une grande variété d'autres produits.

Comme son nom l'indique "sensible à la pression", le degré de liaison entre une surface donnée et le liant autoadhésif est influencée par la quantité de pression utilisée pour appliquer l'adhésif sur la surface cible. D'autres facteurs interviennent également et sont importants pour une bonne adhérence telle que la douceur, l'énergie de surface, et l'élimination des contaminants.

Les PSA sont généralement conçus pour former une liaison et maintenir celle-ci à la température ambiante. L'homme de l'art veillera à choisir une formulation d'adhésif autoadhésif adaptée aux conditions de son utilisation. En effet, les PSA généralement voient leur adhérence se réduire ou disparaitre à basse température et voient leur capacité à tenir le cisaillement se réduire à températures élevées.

Les PSA sont généralement à base d'élastomère couplé avec un agent adhésif supplémentaire approprié ou agent « tackifiant » (par exemple, une résine ester).

Les élastomères peuvent être à base:
1/ d'acrylates, qui peuvent être suffisamment collant pour ne pas exiger un agent tackifiant supplémentaire.
2/ de nitriles
3/ de silicone, réquérant des agents tackifiants spéciaux telles que des résines de silicate de type « MQ », composées de triméthyle silane monofonctionnel ("M") qui a réagi avec tétrachlorure de silicium quadrifonctionnel ("Q"). Les PSA à base de silicone sont par exemple des gommes et résines de polydiméthylsiloxane dispersées dans du xylène ou un mélange de xylène et toluène.
4/ des copolymères blocs à base de styrène tel que des copolymères blocs Styrène butadiène -styrène (SBS), Styrène-éthylène / butylène -styrène (SEBS), styrène-éthylène / propylène (SEP), Styrène isoprène -styrène (SIS),
5/ Les éthers vinyliques.

Avantageusement, l'adhésif sensible à la pression est choisi parmi les PSA à base d'acrylates et les PSA à base de silicone.

Ces adhésifs sont commercialisés sous forme de rouleaux d'adhésifs double face.

On peut citer comme PSA à base de silicone les adhésifs de Dow Corning® tel que le 2013 Adhesive, 7657 Adhesive, Q2-7735 Adhesive, Q2-7406 Adhesive, Q2-7566 Adhesive, 7355 Adhesive, 7358 Adhesive, 280A Adhesive, 282 Adhesive, 7651 Adhesive, 7652 Adhesive, 7356 Adhesive.

Le premier substrat diélectrique (et/ou le deuxième) peut être en matière plastique flexible ou non, par exemple d'épaisseur d'au plus 300µm ou 150µm ou d'au moins 1mm. Le substrat peut être, notamment, à base de polyester en particulier un polyéthylène téréphtalate (PET), polyéthylène naphtalate (PEN), de polycarbonate, un polyoléfine (polyéthylène, polypropylène), de polyuréthane, de polyméthacrylate de méthyle (PMMA), de polyamide, de polyimide, ou un polyvinyle chloride (PVC) voire de polymère fluoré tel que l'éthylène tétrafluoroéthylène (ETFE), le polyfluorure de vinylidène (PVDF), le polychlorotrifluoréthylène (PCTFE), l'éthylène de chlorotrifluoréthylène (ECTFE), les copolymères éthylène-propylène fluorés (FEP).

On préfère le PET ou encore le PC ou le PMMA. Le choix dépend notamment de la flexibilité recherchée.

Le premier substrat diélectrique peut être une première feuille de verre qui est côté première face externe opposée à la première face interne feuilleté via un intercalaire de feuilletage thermoplastique à une autre feuille de verre.

Cet intercalaire de feuilletage polymère peut être, notamment, une couche à base de polybutyral de vinyle (PVB), d'éthylène vinylacétate (EVA), de polyéthylène (PE), de polychlorure de vinyle (PVC), d'uréthane thermoplastique, de polyuréthane PU, ou même de ionomère, d'adhésif à base de polyoléfine, de silicone thermoplastique ou en résine pluri ou mono-composants, réticulable thermiquement (époxy, PU) ou aux ultraviolets (époxy, résine acrylique).

Le premier substrat porteur (et/ou le deuxième susbtrat porteur, verre ou plastique peut être de plus grande dimension que la couche électroactive. En particulier le premier substrat porteur peut être revêtu d'une couche électroconductrice couvrant tout ou partie sa face principale (par exemple au moins 50% ou 80%) et dont une région forme la première électrode notamment isolée électriquement (par une ou des lignes isolantes, gravure laser etc) d'une autre région de cette couche. Cette couche électroconductrice peut servir de couche de contrôle solaire, de couche chauffante etc

On peut utiliser par exemple un film clair de PET revêtu d'une couche électroconductrice, par exemple film clair de PET dénommé XIR de la société Eastman, un film coextrudé en PET-PMMA, par exemple du type SRF 3M® (SRF pour Solar Reflecting Film), mais aussi de nombreux autres films (par exemple en PC, PE, PEN, PMMA, PVC) etc.

Dans une réalisation alternative au substrat porteur d'électrode, plus flexible, la première couche barrière polymérique est un premier film, de préférence transparent, porteur de la première électrode, notamment avec les épaisseurs et/ou les matériaux précités en particulier un premier PET. Et optionnellement la deuxième couche barrière polymérique éventuellement est un deuxième film de préférence transparent porteur de la deuxième électrode notamment avec les épaisseurs et/ou les matériaux précités en particulier un deuxième PET.

La première couche barrière polymérique peut en particulier être un premier film de préférence transparent porteur de la première électrode et même le dispositif peut comporter en outre une première feuille additionnelle, transparente, polymérique ou en verre lié à la première électrode par une première couche adhésive diélectrique transparente (colle optique ou OCA en anglais pour « optically clear adhesive ») ou un intercalaire de feuilletage thermoplastique. Et éventuellement la deuxième couche barrière polymérique peut en particulier être un deuxième film porteur ou non de la deuxième électrode et même le dispositif comporte en outre une deuxième feuille additionnelle, transparente, polymérique ou en verre lié à la première électrode par une deuxième couche adhésive diélectrique transparente (colle optique) de préférence comme la première couche adhésive.

La colle optique est notamment (une résine) à base de polyester, acrylique ou silicone. Il peut s'agir d'un adhésif sensible à la pression (PSA).

La première couche adhésive diélectrique transparente (et/ou la deuxième éventuelle) peut être une feuille d'adhésif sensible à la pression.
Un adhésif sensible à la pression, abrégé PSA et communément appelé auto-adhésif, est un adhésif qui forme une liaison lorsqu'une pression lui est appliquée de manière à solidariser l'adhésif avec la surface à coller. Aucun solvant, ni d'eau, ou de chaleur n'est nécessaire pour activer l'adhésif. Il est utilisé dans des garnitures d'automobile, et dans une grande une grande variété d'autres produits.

Comme son nom l'indique "sensible à la pression", le degré de liaison entre une surface donnée et le liant autoadhésif est influencée par la quantité de pression utilisée pour appliquer l'adhésif sur la surface cible. D'autres facteurs interviennent également et sont importants pour une bonne adhérence telle que la douceur, l'énergie de surface, et l'élimination des contaminants.

Les PSA sont généralement conçus pour former une liaison et maintenir celle-ci à la température ambiante. L'homme de l'art veillera à choisir une formulation d'adhésif autoadhésif adaptée aux conditions de son utilisation. En effet, les PSA généralement voient leur adhérence se réduire ou disparaitre à basse température et voient leur capacité à tenir le cisaillement se réduire à températures élevées.

Les PSA sont généralement à base d'élastomère couplé avec un agent adhésif supplémentaire approprié ou agent « tackifiant » (par exemple, une résine ester).

Les élastomères peuvent être à base:
1/ d'acrylates, qui peuvent être suffisamment collant pour ne pas exiger un agent tackifiant supplémentaire,
2/ de nitriles
3/ de silicone, réquérant des agents tackifiants spéciaux telles que des résines de silicate de type « MQ », composées de triméthyle silane monofonctionnel ("M") qui a réagi avec tétrachlorure de silicium quadrifonctionnel ("Q"). Les PSA à base de silicone sont par exemple des gommes et résines de polydiméthylsiloxane dispersées dans du xylène ou un mélange de xylène et toluène.
4/ des copolymères blocs à base de styrène tel que des copolymères blocs Styrène butadiène -styrène (SBS), Styrène-éthylène / butylène -styrène (SEBS), styrène-éthylène / propylène (SEP), Styrène isoprène -styrène (SIS),
5/ Les éthers vinyliques.

Avantageusement, l'adhésif sensible à la pression est choisi parmi les PSA à base d'acrylates et les PSA à base de silicone.

Ces adhésifs sont commercialisés sous forme de rouleaux d'adhésifs double face.

On peut citer commePSA à base de silicone les adhésifs de Dow Corning® tel que le 2013 Adhesive, 7657 Adhesive, Q2-7735 Adhesive, Q2-7406 Adhesive, Q2-7566 Adhesive, 7355 Adhesive, 7358 Adhesive, 280A Adhesive, 282 Adhesive, 7651 Adhesive, 7652 Adhesive, 7356 Adhesive.

La feuille additionnelle peut être de plus grande surface que l'empilement.

L'une des faces externes libres de l'empilement (substrat ou film barrière) peut comprendre un film plastique temporaire de protection (« liner » en anglais) c'est-à-dire qui couvre une couche adhésive (acrylique etc) couvrante -en pleine face- ou formant un cadre périphérique. Cette couche adhésive peut servir à fixer l'empilement sur tout type de support plan, ou courbé, transparent comme un vitrage ou un film plastique, ou opaque (mur) si le dispositif est un miroir commutable (l'électrode destinée à être coté support est alors réfléchissante).

La première couche barrière polymérique peut être teintée : notamment on choisit des teintes neutres telles que bleu, vert, gris ou bronze.

Le premier et/ou deuxième substrat peut être de plus grandes surfaces que la couche électroactive.

Dans des réalisations préférées, l'empilement peut comporter la séquence (stricte ou non) suivant (les éléments entre parenthèses étant facultatif):
- (anti-rayures ou 'liner')/premier substrat PET/ première électrode (comme ITO etc)/ premier film barrière (comme PET)/couche électroactive/(deuxième film barrière (comme PET) /) deuxième électrode (comme ITO etc)/ deuxième substrat PET/ (anti-rayures)
- premier substrat verre/ première électrode (comme ITO etc)/ premier film barrière (comme PET) /couche électroactive/ /(deuxième film barrière comme PET /) deuxième électrode (comme ITO etc)/ deuxième substrat verre
- verre/PVB ou EVA voire PU /premier substrat PET/ première électrode (comme ITO etc)/ premier film barrière comme PET /couche électroactive/ /(deuxième film barrière comme PET /) deuxième électrode (comme ITO etc)/ deuxième substrat PET(/ PVB ou EVA voire PU/ verre/)
- première électrode (comme ITO etc)/ premier film barrière comme PET et porteur de la première électrode/couche électroactive/ /(deuxième film barrière comme PET /) deuxième électrode (ITO etc)/ deuxième substrat PET/(anti-rayures)
- PET ou VERRE/colle optique/ première électrode (comme ITO etc)/ premier film barrière comme PET et porteur de la première électrode /couche électroactive//(deuxième film barrière comme PET /) deuxième électrode (comme ITO etc)/ deuxième substrat PET
- première électrode (comme ITO etc)/ premier film barrière comme PET et porteur de la première électrode /couche électroactive/(deuxième film barrière comme PET /) deuxième électrode (comme ITO etc)/ deuxième substrat PET
- première électrode (comme ITO etc)/ premier film barrière comme PET et porteur de la première électrode /couche électroactive/ deuxième film barrière comme PET et porteur de la deuxième électrode (comme ITO etc).

Chaque film barrière est de préférence flexible, plan ou courbe, apte à s'adapter à la ou aux courbures d'un vitrage ou autre support par exemple. Chaque substrat peut être flexible, plan ou courbe, apte à s'adapter à la ou aux courbures d'un vitrage additionnel ou autre support par exemple.

Les faces principales de chaque couche barrière (et/ou de chaque substrat) peuvent être rectangulaires, carrées ou même de toute autre forme (ronde, ovale, polygonale...). Chaque couche barrière et/ou substrat peut être de grande taille par exemple de surface supérieure à 0,02 m² voire même 0,5 m² ou 1 m².

La ou chaque couche barrière -dépôt ou film- (et/ou chaque substrat) peut être transparente et présenter de préférence une transmission lumineuse T_{L} supérieure ou égale à 70%, de préférence supérieure ou égale à 80% voire à 90%.

La ou chaque couche barrière -dépôt ou film-, peut être teinté par exemple en bleu, vert, gris ou bronze. La transmission lumineuse TL peut alors d'au plus 55%, notamment de 20 % à 50%.

La ou chaque substrat notamment en verre peut être toutefois teinté par exemple en bleu, vert, gris ou bronze.

La première électrode et/ou la deuxième électrode peut être une couche d'oxyde transparent conducteur dite couche TCO.

La couche de TCO est de préférence d'épaisseur adaptée pour avoir une résistance (« intrinsèque ») par carré inférieure ou égale à 150Ω/□, de préférence inférieure ou égale à 120Ω/□.

La couche de TCO est par exemple alimentée électriquement via des moyens d'amenée de courant de préférence métalliques (à base d'argent, de cuivre etc) de préférence sous forme d'une bande (métallique) /le long d'un bord.

Le film barrière ou le premier substrat porteur de la couche TCO peut dépasser au-delà de la couche électroactive pour favoriser la connexion électrique par exemple faite comme dans la demande WO2011/161391 (figure 1 ou autres figures) ou EP1653275.

La couche d'un oxyde transparent électroconducteur est de préférence une couche d'oxyde d'étain et d'indium (ITO). D'autres couches sont possibles, parmi lesquelles les couches minces :
- à base d'oxyde d'indium et de zinc (appelées « IZO »), d'oxyde d'indium de galium et de zinc (IGZO)
- à base d'oxyde de zinc dopé, de préférence au gallium ou à l'aluminium (AZO, GZO), à base d'oxyde de titane dopé au niobium, à base de stannate de cadmium ou de zinc,
- à base d'oxyde d'étain dopé au fluor (SnO₂:F), à base d'oxyde d'étain dopé à l'antimoine.

Dans le cas de l'oxyde de zinc dopé à l'aluminium, le taux de dopage (c'est-à-dire le poids d'oxyde d'aluminium rapporté au poids total) est de préférence inférieur à 3%. Dans le cas du gallium, le taux de dopage peut être plus élevé, typiquement compris dans un domaine allant de 5 à 6%.

Dans le cas de l'ITO, le pourcentage atomique de Sn est de préférence compris dans un domaine allant de 5 à 70%, notamment de 10 à 60%.

Pour les couches à base d'oxyde d'étain dopé au fluor, le pourcentage atomique de fluor est de préférence d'au plus 5%, généralement de 1 à 2%.

L'ITO est particulièrement préféré ou même IZO, AZO, GZO ou IGZO. Aisément déposées par un procédé de pulvérisation cathodique, notamment assisté par champ magnétique, appelé « procédé magnétron », ces couches se distinguent par une plus faible rugosité que par CVD.

Un des avantages de l'oxyde d'étain dopé au fluor est en revanche sa facilité de dépôt par dépôt chimique en phase vapeur (CVD), et peut être mis en œuvre sur la ligne de production de verre plat par flottage. Dans un mode de réalisation, les couches de l'empilement sont obtenues par dépôt chimique en phase vapeur, directement sur la ligne de production de la feuille de verre par flottage. Le dépôt est réalisé par pulvérisation de précurseurs au travers de buses, sur le ruban de verre chaud. Le dépôt des différentes couches peut se faire à différents endroits de la ligne : dans l'enceinte de flottage, entre l'enceinte de flottage et l'étenderie, ou dans l'étenderie. Les précurseurs sont généralement des molécules organométalliques ou du type halogénures.

A titre d'exemples, on peut citer pour l'oxyde d'étain dopé au fluor le tétrachlorure d'étain, le trichlorure de mono-butyl étain (MTBCL), l'acide trifluoroacétique, l'acide fluorhydrique. L'oxyde de silicium peut être obtenu à l'aide de silane, de tétraéthoxysilane (TEOS), ou encore d'hexamethyldisiloxane (HDMSO), en utilisant éventuellement un accélérateur tel que le triéthylphosphate.

On peut également disposer, entre le substrat et la couche TCO un empilement de couches, de neutralisation. De telles couches (au moins deux couches) permettent d'influer sur l'aspect en réflexion du vitrage, notamment sur sa couleur en réflexion. Une fois le support électroconducteur revêtu de la couche de cristaux liquides (et même une fois rajouté un autre support électroconducteur identique), on obtient des couleurs de préférence neutres, légèrement bleutées ou vertes, caractérisées par des coordonnées colorimétriques a*, b* proches de 0, a*, b* négatives ou a* négative et b* légèrement positif, sont préférées à des couleurs violet rose, rouge (a* plus positive).

Dans un mode de réalisation préféré, l'empilement comprend dans cet ordre sur la face principale sous la couche TCO :
- une première sous-couche à base de nitrure de silicium (SiNₓ, de préférence Si₃N₄) éventuellement dopé de préférence aluminium, d'épaisseur e_{y} de 5 à 50nm, ou mieux de 10nm à 35nm, de préférence (directement) en contact avec la face principale et de préférence essentiellement constituée d'un nitrure de silicium éventuellement dopé de préférence aluminium ;
- une deuxième sous-couche à base d'oxyde de silicium (SiOₓ, de préférence SiO₂), d'épaisseur e_{z} de 10 à 50nm, ou mieux de 20nm à 50nm, de préférence essentiellement constituée d'oxyde de silicium, sous couche non dopée ou éventuellement dopé de préférence aluminium de préférence en contact avec la couche TCO.

Quelques exemples d'empilements de couches minces formant la première électrode sont donnés ci-après :
- SiNₓ / SiOₓ / TCO (ITO de préférence) / SiNₓ / (SnZnO) / SiOₓ
- SiNₓ / SiOₓ / TCO (ITO de préférence) / SiNₓ / SnZnO / SiOₓ
- SiNₓ / (SnZnO)/ SiOₓ / TCO (ITO de préférence) / SiNₓ / (SnZnO) / SiOₓ.

Les différentes couches peuvent être déposées sur le substrat par tout type de procédé de dépôt de couche mince. Il peut par exemple s'agir de procédés, pyrolyse (liquide ou solide), dépôt chimique en phase vapeur (CVD), notamment assisté par plasma (PECVD en anglais), éventuellement sous pression atmosphérique (APPECVD), évaporation voire de type sol-gel.

Le dispositif selon l'invention peut comporter un vitrage feuilleté comportant :
- une première feuille de verre additionnelle notamment d'épaisseur de 0,7mm à 4mm
- un intercalaire de feuilletage thermoplastique
- une deuxième feuille de verre additionnelle notamment d'épaisseur de 0,7mm à 4mm ou même de moins de 0,7mm ou encore une feuille de plastique comme un polycarbonate ou un PMMA (notamment avec un intercalaire de feuilletage en PU) les faces principales internes dites F2 et F3 des première et deuxième feuilles de verre additionnelles étant en regard, l'empilement étant les faces F2 et F3 et de préférence dans l'intercalaire de feuilletage.

De préférence l'intercalaire feuilletage thermoplastique entoure le chant de l'empilement.

La tranche de l'empilement peut être en retrait par rapport à la tranche la plus externe de l'intercalaire de feuilletage (ou de la première feuille).

De préférence les éventuels premier et/ou deuxième substrats sont de préférence d'épaisseur d'au plus 0,7mm et même d'au plus 0,3 ou 0,2mm. Pour le ou les substrats en verre on peut choisir du verre mince (moins de 1mm) et même ultramince ('UTG' en anglais).

L'une des feuilles de verre additionnelle peut être teintée et l'autre clair ou extraclair. L'intercalaire de feuilletage thermoplastique peut être clair, extraclair ou teinté.

Le dispositif selon l'invention peut comprendre un vitrage notamment feuilleté et/ou bombé, et l'empilement forme une bande notamment périphérique sur une portion d'une face principale du vitrage.

On peut utiliser le dispositif à diffusion variable par cristaux liquides tel que défini précédemment dans un véhicule ou bâtiment.

Il peut être utilisé notamment comme:
- cloison interne (entre deux pièces ou dans un espace) dans un bâtiment, dans un véhicule terrestre, ferroviaire, maritime ou aérien (entre deux compartiments, dans un taxi, bus, train etc), notamment comme paroi vitrée de douche, baignoire,
- porte vitrée (d'entrée ou de service), fenêtre (simple, double, triple vitrage), plafond, dallage (sol, plafond), porte de WC, une partie vitrée de meuble urbain ou domestique
- vitrage d'un véhicule automobile (voiture, camion, bus, car ..) donc terrestre, ferroviaire, maritime (bateau) : pare-brise, vitrage latéral, toit..
- écran de projection,
- façade de magasin, vitrine notamment d'un guichet.

Naturellement, il peut former tout ou partie d'un vitrage (une cloison et fenêtre type imposte etc.

Le dispositif selon l'invention peut comporter un vitrage feuilleté et notamment bombé, et l'empilement de couches est entre les premier et deuxième vitrages respectivement dits vitrages extérieur et intérieur et forme une bande périphérique sur une portion supérieure du vitrage, la tranche dite externe de l'empilement étant masqué de l'extérieur par une première couche périphérique opaque notamment un émail sur le vitrage extérieur (de préférence en face F2), et/ou la tranche dite interne de l'empilement étant masqué de l'intérieur par une deuxième couche périphérique opaque notamment un émail sur le vitrage intérieur (en face F4 par exemple voire face F3).

Pour son intégration dans un vitrage feuilleté on peut utiliser :
- trois feuillets (PVB, EVA, PU etc, monocouche ou multicouche) en particulier deux feuillets pleins avec chacun en contact avec l'un des deux vitrages et un feuillet central avec une réserve pour loger l'empilement
- deux feuillets (PVB, EVA, PU etc monocouche ou multicouche) surtout si l'empilement est assez mince pour que les deux feuillets se rejoignent par fluage de part et d'autre l'empilement.

Pour le premier et/ou le deuxième substrat ou encore ou pour une feuille de verre additionnelle ou un vitrage d'un vitrage feuilleté et/ou multiple on peut choisir un verre clair ou extra-clair. Un verre clair contient typiquement une teneur pondérale en oxyde de fer de l'ordre de 0,05 à 0,2%, tandis qu'un verre extra-clair contient généralement environ 0,005 à 0,03% d'oxyde de fer.

La feuille de verre additionnelle ou un vitrage d'un vitrage feuilleté et/ou multiple, peut être toutefois teinté par exemple en bleu, vert, gris ou bronze.

Une feuille de verre additionnelle teinté ou un vitrage teinté d'un vitrage feuilleté et/ou multiple, peut présenter de préférence une transmission lumineuse T_{L} supérieure ou égale à 10% - par exemple dans un contexte où le milieu du côté de la face extérieure du substrat (opposée à la face avec l'électrode) est très éclairé -, et de préférence est supérieure ou égale à 40%.

Le verre est de préférence de type silico-sodo-calcique mais il peut également être en verre de type borosilicate ou alumino-borosilicate. L'épaisseur du verre est généralement comprise dans un domaine allant de 0,5 mm à 19 mm, de préférence de 0,7 à 9 mm, notamment de 2 à 8 mm, voire de 4 à 6 mm.

Le verre est de préférence du type flotté, c'est-à-dire susceptible d'avoir été obtenu par un procédé consistant à déverser le verre fondu sur un bain d'étain en fusion (bain « float »). Dans ce cas, l'empilement peut aussi bien être déposé sur la face « étain » que sur la face « atmosphère » du substrat. On entend par faces « atmosphère » et « étain », les faces du substrat ayant été respectivement en contact avec l'atmosphère régnant dans le bain float et en contact avec l'étain fondu. La face étain contient une faible quantité superficielle d'étain ayant diffusé dans la structure du verre.

L'intercalaire de feuilletage thermoplastique assure une liaison avec un élément rigide ou flexible. Cet intercalaire de feuilletage polymère peut être, notamment, une couche à base de polybutyral de vinyle (PVB), d'éthylène vinylacétate (EVA), de polyéthylène (PE), de polychlorure de vinyle (PVC), d'uréthane thermoplastique, de polyuréthane PU, de ionomère, d'adhésif à base de polyoléfine, de silicone thermoplastique ou en résine pluri ou mono-composants, réticulable thermiquement (époxy, PU) ou aux ultraviolets (époxy, résine acrylique).

L'intercalaire PVB peut être en coin donc avec une section transversale diminuant en forme en coin du haut vers le bas du vitrage feuilleté pour éviter une double image dans le cas d'un affichage tête haute (HUD en anglais), tout particulièrement pour un pare-brise.

L'intercalaire PVB est éventuellement acoustique et/ou teinté.

L'intercalaire PVB acoustique peut comprendre au moins une couche dite centrale en matériau plastique viscoélastique aux propriétés d'amortissement vibro-acoustique notamment à base de polyvinylbutyral (PVB) et de plastifiant, et comprenant en outre deux couches externes en PVB standard, la couche centrale étant entre les deux couches externes.

Eventuellement l'une ou les deux couches externes a une section transversale diminuant en forme en coin du haut vers le bas du vitrage feuilleté, la couche en matériau plastique viscoélastique aux propriétés d'amortissement vibro-acoustique ayant une section transversale constante du haut vers le bas du vitrage feuilleté. exemple de feuillet acoustique on peut citer le brevet EP0844075.

Le premier et/ou deuxième vitrage du vitrage feuilleté peut (selon le rendu esthétique, l'effet optique souhaité) être un verre clair (de transmission lumineuse T_{L} supérieure ou égale à 90% pour une épaisseur de 4mm), par exemple un verre de composition standard sodocalcique le Planilux® de la société Saint-Gobain Glass, ou extra-clair (T_{L} supérieure ou égale à 91,5% pour une épaisseur de 4 mm), par exemple un verre silico-sodo-calcique avec moins de 0,05% de Fe III ou de Fe₂O₃ le verre Diamant® de Saint-Gobain Glass, ou Optiwhite® de Pilkington, ou B270® de Schott, ou d'autre composition décrite dans le document WO04/025334.on peut aussi choisir le verre Planiclear® de la société Saint-Gobain Glass.

Le verre du premier et/ou deuxième vitrage peut être neutre (sans coloration), ou (légèrement) teinté notamment gris ou vert, tel le verre TSA de la société Saint-Gobain Glass. Le verre du premier et/ou deuxième vitrage peut avoir subi un traitement chimique ou thermique du type durcissement, recuit ou une trempe (pour une meilleure résistance mécanique notamment) ou être semi trempé.

La transmission lumineuse T_{L} peut être mesurée selon la norme ISO 9050 :2003 en utilisant l'illuminant D65, et est la transmission totale (notamment intégrée dans le domaine du visible et pondérée par la courbe de sensibilité de l'œil humain), tenant compte à la fois de la transmission directe et de l'éventuelle transmission diffuse, la mesure étant faite par exemple à l'aide d'un spectrophotomètre muni d'une sphère intégrante, la mesure à une épaisseur donnée étant ensuite convertie le cas échéant à l'épaisseur de référence de 4mm selon la norme ISO 9050 :2003.

Le vitrage feuilleté bombé selon l'invention notamment pare-brise ou vitrage latéral, peut avoir une T_{L} -dans le clair de vitre- qui est de préférence d'au moins 70% et même d'au moins 75% ou même d'au moins80%.

Le vitrage feuilleté bombé selon l'invention, notamment toit vitré, peut avoir une transmission lumineuse T_{L} d'au plus 10% et même de 1 à 6%.

Pour un toit automobile, on préfère l'un au moins ou tous les critères suivants :
- une transmission énergétique T_{E} d'au plus 10% et même de 4 à 6%,
- une réflexion énergétique R_{E} (de préférence côté face F1) d'au plus 10%, mieux de 4 à 5%
- et une transmission totale de l'énergie solaire TTS <30% et même <26%, même de 20 à 23%.

Un tableau A ci-dessous donne des exemples de verre vendu par la Demanderesse. Le verre SGS THERMOCONTROL ® Absorbing/ Venus améliore le confort thermique en absorbant la charge énergétique dans la masse du verre. Ces verres sont divisés en deux catégories : « Vision » (Transmission lumineuse>70%) et « Privacy » (Transmission lumineuse <70%).

**Tableau A**

| Type de verre | TL (%) | TE (%) | RE (%) |
|---|---|---|---|
| SGS THERMOCONTROL® Venus Green 55 | 49 | 27 | 7 |
| Haute Performance teinté vert // Verre Clair | 28 | 16 | 3 |
| SGS THERMOCONTROL® Venus Green 35 | 35 | 22 | 5 |
| SGS THERMOCONTROLO Venus Grey 10 | 10 | 8 | 1 |
| SGS THERMOCONTROL® Absorbing TSA3+ | 71 | 44 | 18 |
| Verre standard vert | 78 | 53 | 25 |

Le verre « Vision » est adapté à tous les types de vitrage dans le véhicule: vert/ bleu/gris et assure une transmission énergétique réduite (TE). La couleur la plus appréciée à cette fin est le vert. Elle a été choisie en raison de son aspect neutre qui n'affecte pas l'harmonie des couleurs d'un véhicule.

Le verre « Privacy » est un vitrage teinté dans la masse pour le confort thermique et l'intimité. C'est un vitrage surteinté vert foncé ou gris foncé. Pour assurer l'intimité, ce vitrage présente des valeurs de transmission lumineuse qui sont au-dessous de 70%, généralement autour de 55% ou moins. En raison de sa teinte foncée, ce type de verre assure aussi une faible transmission UV (les rayons UV peuvent causer des irritations de la peau).

Dans la plupart des pays, le verre Vénus / Privacy est adapté aux vitrages latéraux arrière (après le pilier B), lunette arrière et toit.

SGS THERMOCONTROL ® Venus est constitué de vitrage surteinté de couleur gris foncé ou vert foncé. Ils ont tous les avantages thermiques du verre de type « Vision » (SGS THERMOCONTROL ® Type) avec une protection solaire améliorée:
- des valeurs plus faibles en transmission énergétique (par rapport à toutes les autres solutions de verre),
- sa couleur foncée bloque également le rayonnement UV, qui est responsable de l'irritation de la peau et la décoloration de l'habitacle,
- offre une plus grande intimité pour les passagers du véhicule (il est difficile de voir à travers le verre depuis l'extérieur).

De préférence le vitrage feuilleté bombé forme un pare-brise de véhicule routier tel qu'une automobile, un camion.

Le bombage des premier et deuxième vitrages (pare-brise notamment) peut être dans une ou plusieurs directions par exemple décrit dans le document WO2010136702.

L'aire de la face principale F1 (parebrise ou toit notamment) peut être supérieure à 1,5m² et être par exemple inférieure à 3m².

Afin de limiter l'échauffement dans l'habitacle ou de limiter l'usage d'air conditionné, l'un des vitrages au moins (de préférence le verre extérieur) est teinté, et le vitrage feuilleté peut comporter également une couche réfléchissant ou absorbant le rayonnement solaire, de préférence en face F4 ou en face F2 ou F3, en particulier une couche d'oxyde transparent électro-conducteur dite couche TCO (en face F4) ou même un empilement de couches minces comprenant au moins une couche TCO, ou d'empilements de couches minces comprenant au moins une couche d'argent (en F2 ou F3), là où chaque couche d'argent étant disposée entre des couches diélectriques.

On peut cumuler couche (à l'argent) en face F2 et/ou F3 et couche TCO en face F4.

Une couche TCO (d'un oxyde transparent électro-conducteur) peut être utiliser pour la première ou deuxième électrode ou en face F4 comme décrit. Elle est de préférence une couche d'oxyde mixte d'étain et d'indium (ITO) ou une couche d'oxyde d'étain dopé au fluor (SnO₂ :F) ou.

D'autres couches sont possibles, parmi lesquelles les couches minces à base d'oxydes mixtes d'indium et de zinc (appelées « IZO »), à base d'oxyde de zinc dopé au gallium ou à l'aluminium, à base d'oxyde de titane dopé au niobium, à base de stannate de cadmium ou de zinc, à base d'oxyde d'étain dopé à l'antimoine. Dans le cas de l'oxyde de zinc dopé à l'aluminium, le taux de dopage (c'est-à-dire le poids d'oxyde d'aluminium rapporté au poids total) est de préférence inférieur à 3%. Dans le cas du gallium, le taux de dopage peut être plus élevé, typiquement compris dans un domaine allant de 5 à 6%.

Dans le cas de l'ITO, le pourcentage atomique de Sn est de préférence compris dans un domaine allant de 5 à 70%, notamment de 10 à 60%. Pour les couches à base d'oxyde d'étain dopé au fluor, le pourcentage atomique de fluor est de préférence d'au plus 5%, généralement de 1 à 2%.

L'ITO est particulièrement préféré, notamment par rapport au SnO₂:F. De conductivité électrique plus élevée, son épaisseur peut être plus faible pour obtenir un même niveau d'émissivité. Aisément déposées par un procédé de pulvérisation cathodique, notamment assisté par champ magnétique, appelé « procédé magnétron », ces couches se distinguent par une plus faible rugosité, et donc un plus faible encrassement.

Un des avantages de l'oxyde d'étain dopé au fluor est en revanche sa facilité de dépôt par dépôt chimique en phase vapeur (CVD), qui contrairement au procédé de pulvérisation cathodique, ne nécessite pas de traitement thermique ultérieur, et peut être mis en oeuvre sur la ligne de production de verre plat par flottage.

Par « émissivité », on entend l'émissivité normale à 283 K au sens de la norme EN12898. L'épaisseur de la couche basse émissivité (TCO etc) est ajustée, en fonction de la nature de la couche, de manière à obtenir l'émissivité voulue, laquelle dépend des performances thermiques recherchées. L'émissivité de la couche basse émissivité est par exemple inférieure ou égale à 0,3, notamment à 0,25 ou même à 0,2. Pour des couches en ITO, l'épaisseur sera généralement d'au moins 40 nm, voire d'au moins 50 nm et même d'au moins 70 nm, et souvent d'au plus 150 nm ou d'au plus 200 nm. Pour des couches en oxyde d'étain dopé au fluor, l'épaisseur sera généralement d'au moins 120 nm, voire d'au moins 200 nm, et souvent d'au plus 500 nm.

Par exemple la couche basse émissivité comprend la séquence suivante :sous-couche haut indice/sous-couche bas indice/ une couche TCO/ surcouche diélectrique optionnelle.

Un exemple préféré de couche basse émissivité (protégée durant une trempe, on peut choisir sous-couche haut indice (<40 nm) / sous-couche bas indice (<30 nm) / une couche ITO/ surcouche haut indice (5 - 15 nm))/ surcouche bas indice (<90 nm) barrière/ dernière couche (< 10 nm).

On peut citer couche basse émissivité celles décrites dans le brevet US2015/0146286, sur la face F4, notamment dans les exemples 1 à 3.

En particulier, la face F4 du vitrage feuilleté, est revêtue d'une couche fonctionnelle transparente notamment basse émissivité, de préférence comprenant une couche TCO, dont une zone (alimentée électriquement, donc électrode) formant bouton tactile (pour piloter la première surface lumineuse).

Par ailleurs, on peut utiliser en particulier tous les systèmes à cristaux liquides connus sous les termes de « NCAP » (Nematic Curvilinearly Aligned Phases en anglais) ou « PDLC » (Polymer Dispersed Liquid Cristal en anglais) ou « CLC » (Cholesteric Liquid Cristal en anglais) ou NPD-LCD (Non-homogenous Polymer Dispersed Liquid Crystal Display en anglais).

On peut utiliser des cristaux liquides multistables et en particulier des smectiques bistables, par exemple comme détaillé dans le brevet EP2256545, qui commutent sous l'application d'un champ électrique alternatif sous forme impulsionnelle et qui restent dans l'état commuté jusqu'à l'application d'une nouvelle impulsion.

On peut également utiliser, par exemple, les gels à base de cristaux liquides cholestériques contenant une faible quantité de polymère réticulé, comme ceux décrits dans le brevet WO-92/19695. Plus largement, on peut donc choisir des « PSCT » (Polymer Stabilized Cholesteric Texture en anglais).

Naturellement les cristaux liquides peuvent s'étendre sensiblement sur toute la surface de la première électrode ou sur (au moins) une zone restreinte, éventuellement être sur plusieurs zones.

E1 est par exemple de 10 à 20µm ou moins surtout si on veut uniquement masquer quelque chose qui se trouve loin. Ca peut être plus si le flou à l'état aligné est moins critique.

Plus l'épaisseur E1 est basse, plus la tension de commutation est faible, donc plus on peut se permettre d'avoir un ou des films barrières épais.

L'épaisseur E1 résulte souvent d'un compromis entre faible flou à l'état aligné et fort flou à l'état désordonné.

De préférence E₁ + E₂ + E₀= A où A est compris dans une gamme de 7 ou même 12 ou 20 à 45 µm ou même 40µm ou 35µm.

De préférence on alimente à moins de 150V (amplitude de la tension).

On peut prévoir des connexions électriques avec les électrodes. Par exemple on utilise une première bande électroconductrice (métallique etc) périphérique le long de la première électrode et une deuxième bande électroconductrice périphérique le long de la deuxième électrode. Par exemple la première bande électroconductrice est le long du premier bord latéral ou longitudinal et la deuxième bande électroconductrice est le long d'un deuxième bord opposé (latéral ou longitudinal) et/ou adjacent.

Des rubans conducteurs notamment métalliques par exemple en cuivre, et par exemple d'au plus larges de 2cm, sont par exemple fixés en périphérie sur les électrodes (un ruban par électrode, les rubans étant de préférence sur des bords opposés) pour l'alimentation électrique.

On peut fixer (soudure, colle) des câbles électriques sur ces bandes électroconductrices.

La couche électroactive peut être entourée et en contact avec un joint adhésif de scellement polymérique par exemple en époxy ou de préférence en acrylate par exemple tel que décrit dans le document WO2012/028823. La matière qui va former le joint adhésif est par exemple appliquée en cordon sous forme non polymérisée, avant ou après la dépose de la couche électroactive à cristaux liquides avec la matrice non polymérisée. Ensuite, est opéré un calandrage ou en variante un pressage.

Les polymérisations de la matière pour le joint et de la matrice sont réalisées ensuite.

Par ailleurs, les espaceurs peuvent être de préférence en une matière plastique transparente. Les espaceurs déterminent (grossièrement) l'épaisseur de la couche de cristaux liquides. On préfère par exemple des espaceurs en polyméthacrylate de méthyle (PMMA).

Les espaceurs sont de préférence en matière d'indice optique (sensiblement) égal à l'indice optique de (la matrice polymérique de) la couche de cristaux liquides. Les espaceurs sont par exemple sous forme de billes.

De manière préférée, le procédé de fabrication du dispositif électrocommandable à diffusion variable par cristaux liquides tel que décrit précédemment comprend pour former la première couche barrière polymérique l'utilisation du premier film transparent (décrit précédemment) et éventuellement pour former la deuxième couche barrière polymérique optionnelle l'utilisation du deuxième film transparent (décrit précédemment).

Le premier film peut être porteur de la première électrode comme déjà décrit. On peut même rapporter une feuille de verre ou plastique collée par une couche de colle (optique, colle PSA décrite précédemment) ou un intercalaire de feuilletage (par autoclavage etc), décrit précédemment, sur la première électrode.

Lorsqu'on utilise un premier substrat porteur de la première électrode on peut plaquer la première électrode contre le film barrière ou utiliser la couche d'adhésion décrite précédemment.

La couche de cristaux liquides peut être réalisée à l'aide d'une opération appelée remplissage goutte à goutte.

Pour former dans le vitrage feuilleté avec ledit empilement on peut utiliser :
- trois feuillets (PVB, EVA, PU etc, monocouche ou multicouche) en particulier deux feuillets pleins avec chacun en contact avec l'un des deux vitrages et un feuillet central avec une réserve pour loger l'empilement
- deux feuillets (PVB, EVA, PU etc, monocouche ou multicouche) surtout si l'empilement est assez mince pour que les deux feuillets se rejoignent par fluage de part et d'autre l'empilement.

LE PVB est préféré dans le monde des véhicules.

D'autres détails et caractéristiques de l'invention apparaîtront de la description détaillée qui va suivre, faite en regard des dessins annexés suivants :
- la figure 1 représentant une vue en coupe schématique d'un dispositif à diffusion variable par cristaux liquides avec film barrière polymérique dans un premier mode de réalisation de l'invention
- la figure 2 représentant une vue en coupe schématique d'un dispositif à diffusion variable par cristaux liquides avec film barrière polymérique dans un deuxième mode de réalisation de l'invention
- la figure 3 représentant une vue en coupe schématique d'un dispositif à diffusion variable par cristaux liquides avec film barrière polymérique dans un troisième mode de réalisation de l'invention
- la figure 4 représentant une vue en coupe schématique d'un dispositif à diffusion variable par cristaux liquides avec film barrière polymérique dans un quatrième mode de réalisation de l'invention
- la figure 5 représentant une vue en coupe schématique d'un dispositif à diffusion variable par cristaux liquides avec film barrière polymérique dans un cinquième mode de réalisation de l'invention
- la figure 6 représentant une vue en coupe schématique d'un dispositif à diffusion variable par cristaux liquides avec film barrière polymérique dans un sixième mode de réalisation de l'invention
- la figure 7 représentant une vue en coupe schématique d'un dispositif à diffusion variable par cristaux liquides avec film barrière polymérique dans un septième mode de réalisation de l'invention
- la figure 8 représentant une vue en coupe schématique d'un dispositif à diffusion variable par cristaux liquides avec film barrière polymérique dans un huitième mode de réalisation de l'invention
- la figure 9 représentant une vue en coupe schématique d'un dispositif à diffusion variable par cristaux liquides avec film barrière polymérique dans un neuvième mode de réalisation de l'invention
- la figure 10 représentant une vue en coupe schématique d'un dispositif à diffusion variable par cristaux liquides avec film barrière polymérique dans un dixième mode de réalisation de l'invention
- la figure 11 représentant une vue en coupe schématique d'un dispositif à diffusion variable par cristaux liquides avec film barrière polymérique dans un onzième mode de réalisation de l'invention
- la figure 12 représentant une vue de face schématique d'un dispositif à diffusion variable par cristaux liquides avec film barrière polymérique dans un douzième mode de réalisation de l'invention

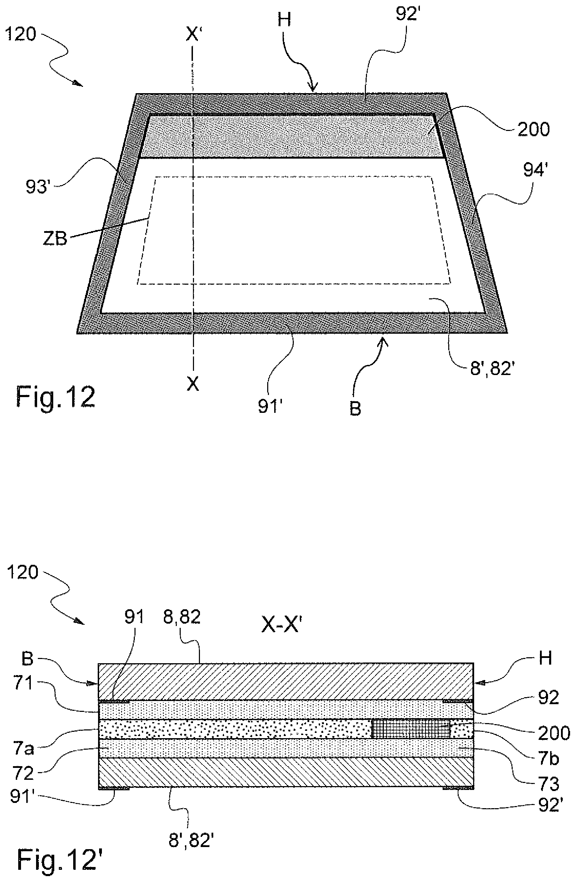

- la figure 12' représentant une vue en coupe schématique du dispositif à diffusion variable par cristaux liquides avec film barrière polymérique de la figure 12.

Les éléments sur les figures ne sont pas représentés à l'échelle.

### EXEMPLE 1

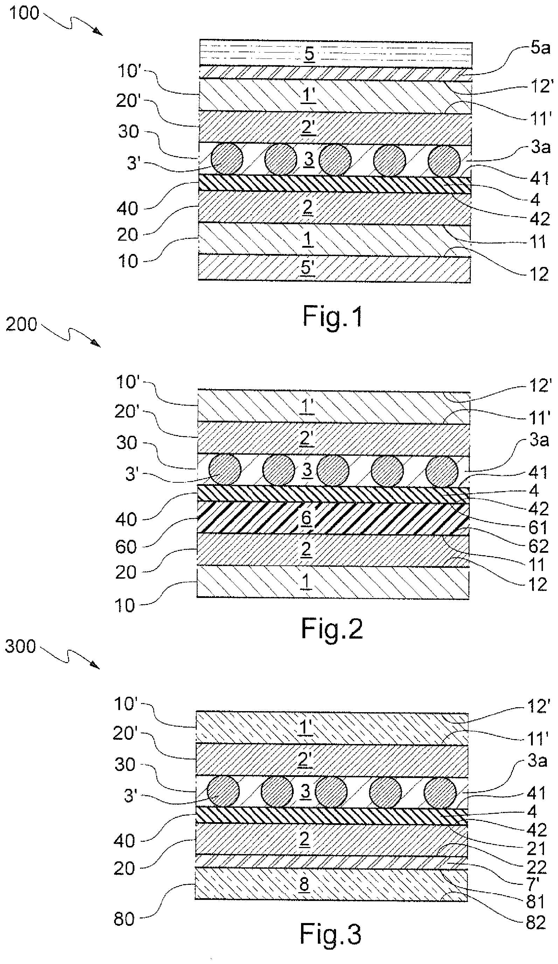

L'exemple de réalisation n°1 représenté dans la figure 1 montre un dispositif électrocommandable à diffusion variable 100 par cristaux liquides selon l'invention.

Sur deux substrats de plastique, en particulier polyester, et mieux tel que du PET 1 et 1' d'épaisseur de 50 à 300µm par exemple de 175µm sont déposées sur les faces principales internes 11, 11' des électrodes 2,2' réalisées en oxyde d'indium et d'étain (ITO) de résistance carré 40ohm/carré, plus largement entre 5 et 300ohm/carré. Et pour une neutralité en couleurs, chaque électrode peut comprendre aussi au moins deux sous-couches minces diélectriques sous la couche ITO.

Pour l'alimentation électrique, des rubans conducteurs (non montrés), notamment métalliques par exemple en cuivre sont fixés par exemple par collage le long et sur des bords périphériques des faces internes 11, 11' et sont en contact avec les électrodes 2,2' (un ruban par électrode, les rubans étant de préférence sur des bords opposés). Ces rubans peuvent dépasser sur au moins un coté de la tranche du substrat 1, 1' en jeu. Ces rubans sont ensuite reliés à une alimentation électrique (non montrée).

Les substrats PET 1,1' peuvent être de toute forme, par exemple rectangulaires, rond, carré, et de toute dimension, par exemple de longueur d'au moins 1m et même de largeur d'au moins 10cm (bande etc). Ils peuvent être d'épaisseur de préférence supérieure à 100µm et d'au plus 300µm pour une meilleure tenue mécanique de l'ensemble et/ou une facilité de mise en oeuvre, de manipulation mais si on veut plus de flexibilité, on peut descendre par exemple jusqu'à 50µm.

Une couche 3 de cristaux liquides est située entre les électrodes 2, 2'. Plus précisément, la couche 3 de cristaux liquides est par exemple de type PDLC et contient des cristaux liquides sous forme de microgouttelettes dispersées dans une matrice 3a en polymère. La couche 3 contient aussi des espaceurs sphériques 3' en polymère transparent. L'épaisseur de la couche 3 est par exemple de 15 µm et peut varier de 5 à 45 µm typiquement.

On peut utiliser des cristaux liquides tel que le composé 4-((4-Éthyle-2,6-difluorophényl)-éthinyl)-4'-propylbiphényl et 2-Fluor-4,4'-bis(trans-4-propylcyclohexyl)-biphenyl par exemple vendu par la société Merck sous la référence MDA-00-3506.

En variante moins préférée on utilise une couche de cristaux liquides avec des espaceurs et sans ajout de polymère.

Les tranches 20,20' électrodes 2,2' et le chant 30 de la couche électroactive sont de préférence en retrait par rapport au chant 10,10' des substrats PETs 1,1'.

Pour prévenir les courts circuits un film barrière plastique de préférence en PET 4 transparent, d'épaisseur de 12µm ou même 25µm, est présent sur la première électrode ITO 2 (qui est sur le premier substrat PET 1) et sous la couche de cristaux liquides 3. Le film barrière 4 peut couvrir la première électrode 2 (au moins la partie active) et son chant 40 être en retrait du chant 10, 10' des substrats PETs 1,1', dans leur alignement ou même s'étendre au-delà par exemple sur un seul côté du chant 10,10'. L'absorption de ce film barrière PET 4 est de moins de 0,1% et a un flou de moins de 1.5%. Le film barrière PET 4 peut être une monocouche ou une multicouche. Par exemple il s'agit d'un tricouche (par coextrusion) tel que le produit Lumirror U60 de TORAY dont le cœur en PET entre deux couches externes coextrudées (en PET aussi).

Le film barrière PET 4 peut avoir sur l'une ou chaque face principale une couche fonctionnelle classique (promotrice d'adhésion etc). L'une ou chaque face principale du film barrière PET 4 peut avoir subi un traitement de surface chimique, comme un greffage de monocouches moléculaire ou une addition de tensioactifs.

On préfère un film barrière PET 4 d'au moins 10µm plus aisément disponible.

A l'état « OFF », c'est-à-dire avant l'application d'une tension électrique, ce vitrage à cristaux liquides 100 est diffusant, c'est-à-dire qu'il transmet optiquement mais n'est pas transparent. Dès qu'une tension sinusoïdale est appliquée entre les deux électrodes, la couche 3 passe à l'état transparent, c'est-à-dire celui dans lequel la vision n'est pas empêchée.

L'ajout du film barrière 4 fait augmenter la tension très légèrement à 120V environ.

Par l'application d'une tension continue de 100V, la résistance du dispositif 100 est quasi infinie (10 GOhm) contre ∼1 kOhm pour un dispositif semblable sans film barrière. Cela démontre l'absence de courts circuits grâce à l'invention.

La couche de cristaux liquides 3 est de préférence en retrait par rapport au chant de premier substrats PET 1,1' et aussi en retrait du chant du film barrière 4. Mieux encore la couche de cristaux liquides 3 peut être entourée par un joint adhésif (non montré) en polymère réticulé qui sur la face principale 42 et la couche ITO 2' (ou directement la face interne 12' du deuxième substrat PET 1') sert en même temps à relier de manière ferme et permanente le deuxième substrat PET 1' et le film barrière 4.

Le film barrière PET 4 peut s'étendre au-delà du chant des substrats PETs 1,1' sur un côté, deux trois cotés ou les quatre côtés.

Le film barrière PET 4 peut faciliter la connexion électrique de la première électrode.

La face extérieure 12 du premier PET 1' comporte une couche antirayures par exemple formée par application d'un mélange à base d'acrylate, comme le produit SR344 et le produit SR399 de Sartomer Company.

La face extérieure 12' du premier PET 1' comporte un film temporaire de protection qui après retrait laisse apparente et prête à l'emploi une couche de colle 5a couvrant la face 12' ou formant un cadre périphérique pour fixer l'empilement sur une portion ou la totalité de la surface d'un support transparent (feuille de plastique, vitrage simple ou feuilleté sur surface interne ou externe d'un vitrage d'un double ou triple vitrage...).

Dans une alternative au film barrière autoporteur PET (ou plus largement polyester), on choisit un film PP par exemple un film de PP multicouche.

Dans une alternative au film barrière autoporteur on choisit comme couche barrière polymérique un dépôt par voie liquide qui doit être d'épaisseur d'au moins 1µm.

L'avantage d'un film autoporteur est son homogénéité d'épaisseur, la facilité de découpe à façon, sa disponibilité à grande échelle à bas coût.

Dans une alternative, le film barrière PET est teinté et/ou le premier et/ou deuxième substrat porteur (plastique ou autre) est teinté.

Dans une alternative au choix de l'ITO seule ou dans une multicouche ou choisit un empilement à l'argent pour l'une ou les deux électrodes. Il peut même choisir pour l'une des électrodes une couche avec un TL moins élevée ou même une couche réfléchissante.

L'une ou les faces externes des premier et deuxième substrats porteurs 1,1' peuvent comporter une ou des couches fonctionnelles (anti reflet etc) déjà connues.

L'un des premiers et deuxièmes substrats porteurs 1,1', et même l'électrode associée, peut être de plus grande dimension que le reste de l'empilement. Par exemple la couche électroconductrice telle que l'ITO (ou autre) peut servir couche de contrôle solaire ou encore de couche chauffante. La zone ITO servant d'électrode peut alors être isolée par gravure laser par exemple pour former une bande d'ITO.

L'un et/ou l'autre des premier et deuxième substrats porteurs 1,1' peut être remplacée par une feuille de verre par exemple de 0,7mm à 4mm avec ou sans couche sur sa face externe ou encore par une feuille plastique -avec ou sans couche sur sa face externe- par exemple plus épaisse (tel que de 1 à 10mm) un polycarbonate ou encore un PMMA.

Le procédé de fabrication de l'exemple n°1 est décrit plus précisément ci-après.

On prépare le mélange suivant pour former la couche de cristaux liquides :
- 0,45 g photoinitiateur A (MXM035-A vendu par Nematel)
- 3,8 g monomère B (MXM035-B vendu par Nematel)
- 5,75 g de cristaux liquides (MDA-00-3506 par exempel de Merck)
- 0,03 g d'espaceurs polymériques de diamètre 15 µm (SP-215 de Sekisui).

D'autres exemples de compositions, à base d'acrylate et de mercaptan, sont décrits dans la demande US4891152.

Ce mélange est déposé goutte à goutte sur le deuxième substrat PET 1' avec la deuxième électrode ITO 2' (et de préférence sa bande conductrice déjà collée) sans aller jusqu'à la tranche du film de préférence. De préférence on forme un joint de scellement périphérique dans une zone de bord avec l'ITO ou même dans une zone marginale sans ITO proche de la tranche du PET 1'. Le joint peut être interrompu par un ou des évents. Pour former le joint, une matière dite préjoint contenant des précurseurs du polymère réticulé formant le joint est de même appliquée directement le long du bord du substrat PET après (voire avant) la dépose de la composition de la couche à cristaux liquides PDLC. Le préjoint forme un cordon qui est ou sera en contact avec la composition de la couche de cristaux liquides PDLC. Plus précisément, la matière adhésive de joint contient par exemple un mélange d'isobornylacrylate, de 2-hydroxyéthyl méthacrylate phosphate et d'oligomères d'acrylates, par exemple formant au moins 10% en poids du préjoint voire au moins 30% en poids du préjoint, et qui contient aussi une charge (poudre minérale) et un photoinitiateur pour sa polymérisation et réticulation aux UV.

A l'aide d'un rouleau on appose le film barrière 4 sur le joint de scellement éventuel et sur le mélange formant alors une couche continue sans aller jusqu'à la tranche du film de préférence.

On réalise le traitement UV pour la polymérisation pendant 100s (source UV) formant ainsi la couche polymérique avec des cristaux liquides et également le joint éventuel.

Le premier substrat PET 1 avec la première électrode ITO 2 (et de préférence sa bande conductrice déjà collée) est superposé sur le film barrière 4 de préférence après le traitement UV.

Alternativement à l'application par un rouleau du film barrière, on procède à un calandrage (ou en variante au pressage).

Le préjoint, doté d'évents, et la couche de cristaux liquides PDLC sont comprimés jusqu'à l'épaisseur des espaceurs. Les évents servent donc à évacuer l'air au fur et à mesure qu'on calandre, et/ou à évacuer l'excès éventuel de couche de cristaux liquides.

On prévoit ensuite l'application d'une matière additionnelle, formant un pont entre les extrémités du joint de préférence à base de précurseur de polymère acrylate et exempt de précurseur d'époxy et par exemple en ladite matière de joint, formant ainsi continuité de matière.

L'opération de polymérisation de la matrice et de réticulation du joint adhésif et de la matière additionnelle est ensuite réalisée par irradiation à la lumière UV.

Il est à noter que les couches d'ITO 2,2' sont de préférence déposées par pulvérisation cathodique magnétron. Les couches d'ITO 2,2' sont déposées par exemple à l'aide d'une cible céramique dans une atmosphère argon oxygène en variante.

### EXEMPLE 2

L'exemple de réalisation n°2 représenté dans la figure 2 montre un dispositif électrocommandable à diffusion variable 200 par cristaux liquides selon l'invention.

Le dispositif 200 diffère du précédent en ce qu'il comporte entre le film barrière 4 (PET etc) et la première électrode 2 (ITO etc) une couche pour favoriser le contact dite couche d'adhésion 6 en polymère conducteur comme le PEDOT /PSS ou en variante une couche diélectrique en hydro gel, avec une face principale interne 61 côté couche électroactive 3 et une face principale externe 62 côté opposé à la couche électroactive.

Lors de la fabrication le film barrière 4 avec la première électrode 2 peut être préaasemblé avec la couche d'adhésion 6 et le premier substrat avec l'ITO 2 puis l'ensemble appliqué contre la couche électroactive à base de cristaux liquides 3.

Dans une alternative on dépose la couche d'adhésion sur le film barrière 4 déjà appliqué contre la couche à base de cristaux liquides 3.

Dans une alternative on dépose la couche d'adhésion sur la première électrode 2 et contre le film barrière 4 déjà appliqué contre la couche à base de cristaux liquides 3.

### EXEMPLE 3

L'exemple de réalisation n°3 représenté dans la figure 3 montre un dispositif électrocommandable à diffusion variable 300 par cristaux liquides selon l'invention.

Le dispositif 300 diffère du premier dispositif 100 en ce que :
- le film barrière 4 est porteur de la première couche électrode 2 si bien que le premier substrat est supprimé
- éventuellement le deuxième substrat 1' est choisi en verre (qui peut un être un verre ultramince UTG, un verre mince ou un verre d'épaisseur standard)
- pour une meilleure tenue une feuille de verre additionnelle 8 par exemple en verre clair ou extraclair et d'au moins 1mm, qui peut être de dimension égale ou supérieure au reste de l'empilement est collée via une colle optique 7' (d'épaisseur quelconque) à base de résine polyester, acrylique ou de silicone par exemple à partir des compositions Dow Adcote mélangeant le produit 76R44 (polyester modifié) avec le produit (co-réactif) 9L10, ou encore les PSA d' Oribain (famille BPS etc) .

Il n'est pas non plus nécessaire de conserver une couche anti rayures ni une feuille de type liner.

Lors de la fabrication le film barrière porteur 4 de la première électrode 2 peut être préaasemblé par collage avec la feuille de verre puis appliqué contre la couche électroactive 3 à base de cristaux liquides.

Dans une alternative, la couche de colle 7' est soit déposée sur la première électrode 2 et on assemble le verre 8 soit sur le verre 8 et on assemble le verre adhésivé.

### EXEMPLE 4

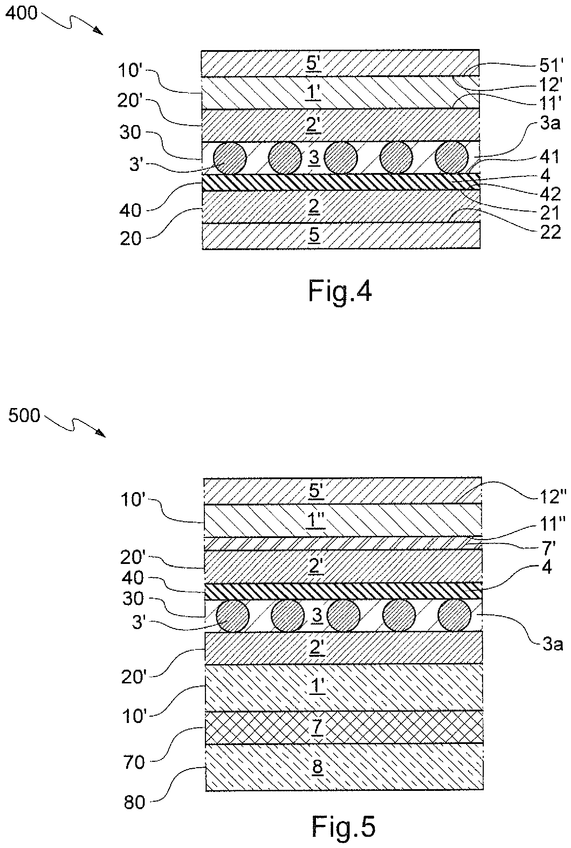

L'exemple de réalisation n°4 représenté dans la figure 4 montre un dispositif électrocommandable à diffusion variable 400 par cristaux liquides selon l'invention.

Le dispositif 400 diffère du premier dispositif 100 en ce que :
- le film barrière 4 est porteur de la première électrode 2 si bien que le premier substrat est supprimé ainsi que la couche antirayures
- la première électrode 2 est éventuellement revêtue d'un film adhésif temporaire de protection 5 notamment avec une couche de colle telle que déjà décrite (OCA, sensible à la pression etc) côté première électrode 2 pour fixer l'empilement sur une portion ou la totalité de la surface d'un support transparent (vitrage, feuille de plastique...)
- le deuxième substrat porteur 1' comporte une couche antirayures telle déjà décrite plutôt qu'un film temporaire adhésif.

Alternativement, on maintient le film temporaire adhésif coté deuxième substrat porteur 1' en gardant éventuellement celui côté première électrode par exemple si l'empilement est entre deux supports transparents (vitrage, feuille de plastique..) sur une portion ou la totalité de leurs surfaces.

### EXEMPLE 5

L'exemple de réalisation n°5 représenté dans la figure 5 montre un dispositif électrocommandable à diffusion variable 500 par cristaux liquides selon l'invention.

Le dispositif 500 diffère du premier dispositif 100 en ce que :
- le film barrière 4 est porteur de la première couche électrode 2 si bien que le premier substrat est supprimé.
- un film plastique externe tel que du PET 1" notamment d'épaisseur de 50 à 300µm est collé par sa face interne 11" via une colle optique 7' (telle que déjà décrite) à la première électrode 2, sa face externe 12" pouvant avoir une couche anti rayures 5'
- la première électrode 2 est éventuellement revêtue d'un film adhésif temporaire de protection 5 notamment avec une couche de colle telle que déjà décrite (OCA, sensible à la pression etc) côté première électrode 2 pour fixer l'empilement sur une portion ou la totalité de la surface d'un support transparent (feuille de plastique, vitrage..).
- le deuxième substrat 1' est une feuille de verre dont la face externe 12' est feuilleté via un intercalaire de feuilletage thermoplastique 7 par exemple PVB ou EVA ou PU à une autre feuille de verre voire plastique (rigide par exemple) 8.
Le chant 70 de cet intercalaire peut être en retrait du chant 80 de l'autre feuille 8.

Le dispositif complet 500 peut servir comme cloison.

De préférence le feuilletage intervient après la polymérisation UV et avant l'application du film plastique externe 1".

Le vitrage feuilleté ainsi que l'électrode 2' associée peuvent être de plus grandes dimensions que le reste de l'empilement. Par exemple la couche électrode (ITO ou autre) peut servir de couche de contrôle solaire ou encore de couche chauffante. La zone servant d'électrode peut alors être isolée par gravure laser par exemple pour former une bande.

### EXEMPLE 6

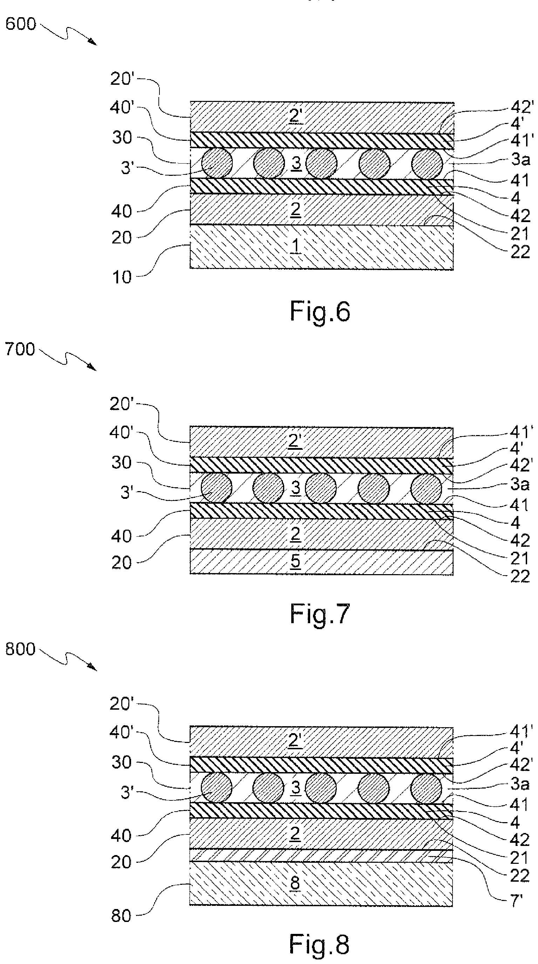

L'exemple de réalisation n°6 représenté dans la figure 6 montre un dispositif électrocommandable à diffusion variable 600 par cristaux liquides selon l'invention.

Le dispositif 600 diffère du premier dispositif 100 en ce que :
- le premier substrat 1 porteur de la première électrode 2 est une feuille de verre, avec une face externe libre (ou avec couche antireflet etc) et en variante la face externe 12 est feuilletée via une intercalaire de feuilletage thermoplastique par exemple PVB ou EVA ou PU à une autre feuille de verre voire un plastique (rigide etc),
- un deuxième film barrière polymérique de préférence de même matière (et dimensions) que le premier (PET) 4' d'épaisseur E2 par exemple de 12µm est entre la couche électroactive 3 et la deuxième électrode et même ici le deuxième film barrière 4' est porteur de la deuxième couche électrode 2' si bien que le deuxième substrat est supprimé.

La face principale externe 42' du deuxième film barrière est en contact avec la deuxième électrode 2' et sa face principale interne 41' est en contact avec la couche électroactive 3. Le chant 40' du deuxième film barrière peut être aligné avec celui 40 du premier film 4 ou du chant du premier substrat 1.

De par l'ajout d'un deuxième film barrière 7' on peut choisir de diminuer l'épaisseur E1 (et d'abaisser E2). Par exemple on choisit E1 et E2 (qui ne sont pas nécessairement égales) entre 2 et 10µm. Comme pour le premier film, le deuxième peut être teinté en fonction des demandes.

Le premier substrat porteur ici vitrage 1 ainsi que la première électrode 2 associée peuvent être de plus grandes dimensions que le reste de l'empilement. Par exemple la couche ITO (ou autre) peut servir couche de contrôle solaire ou encore de couche chauffante. La zone ITO servant d'électrode peut alors être isolée par gravure laser par exemple pou former une bande d'ITO.

### EXEMPLE 7

L'exemple de réalisation n°7 représenté dans la figure 7 montre un dispositif électrocommandable à diffusion variable 700 par cristaux liquides selon l'invention.
Le dispositif 700 diffère du premier dispositif 100 en ce que :
- le premier film barrière 4' est porteur de la première couche électrode 2' si bien que le deuxième substrat est supprimé, un film de protection adhésif temporaire 5 étant éventuellement ajouté
- un deuxième film barrière polymérique de préférence de même matière que le premier (PET) 4' d'épaisseur E2 par exemple de 12µm est entre la couche électroactive 3 et la deuxième électrode 2' et même ici le deuxième film barrière 4' est porteur de la deuxième couche électrode 2' si bien que le deuxième substrat est supprimé.

De par l'ajout d'un deuxième film barrière on peut choisir de diminuer l'épaisseur E1 (et d'abaisser E2). Par exemple on choisit E1 et E2 (qui ne sont pas nécessairement égales) entre 2 et 10µm. Comme pour le premier film le deuxième peut être teinté en fonction des demandes.
Le dispositif 700 peut être flexible, s'adapter aux courbures d'un support de même dimension ou de plus grande taille (sur la face de préférence externe de la paroi de douche, sur la face de préférence interne (face 'F4') d'un vitrage bombé de véhicule notamment automobile: toit, vitrage latéral, pare-brise).

### EXEMPLE 8

L'exemple de réalisation n°8 représenté dans la figure 8 montre un dispositif électrocommandable à diffusion variable 800 par cristaux liquides selon l'invention.

Le dispositif 800 diffère du dispositif précédent 700 en ce que sur la première électrode 2 est collé via une colle optique 7' à une feuille de verre 8 (plane, bombée, trempée etc).
La feuille de verre 8 peut être de plus grande dimension que le reste de l'empilement.

### EXEMPLE 9

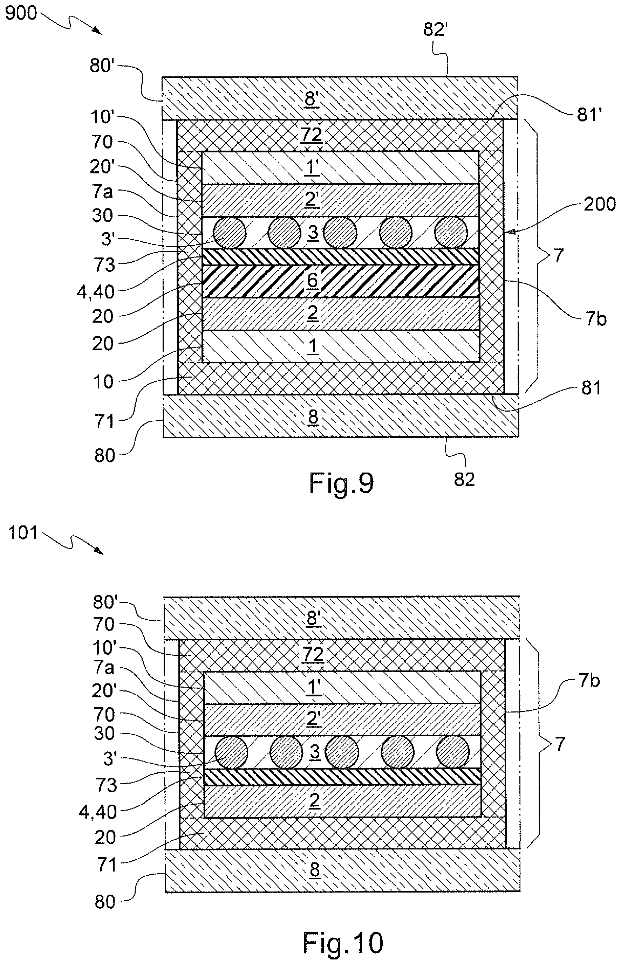

L'exemple de réalisation n°9 représenté dans la figure 9 montre un dispositif électrocommandable à diffusion variable 900 par cristaux liquides selon l'invention.

Le dispositif 900 comporte le deuxième dispositif 200 qui est dans un vitrage feuilleté c'est-à-dire dans un intercalaire de feuilletage 7 par exemple PVB ou EVA submillémétrique ou d'au plus 2mm entre un premier et un deuxième vitrage 8,8' par exemple de forme générale rectangulaire (ou plus largement quadrilatère, polygonale) de dimensions identiques ou similaires par exemple d'épaisseur d'au plus 5mm ou 3mm avec des faces principales internes 81,81' côté intercalaire et externes 82,82'.

Lors de la fabrication on peut utiliser trois feuillets d'intercalaire : deux feuillets pleins 71, 72 contre les faces internes 81,81' des vitrages 8, 8' et un feuillet central 73 avec une ouverture pour loger l'empilement 200. Apres feuilletage l'interface entre feuillets (symbolisé en pointillés) n'est pas forcément discernable. On préfère que l'ouverture soit fermée plutôt que totalement débouchante sur un côté. Ainsi tout le chant de l'empilement est entouré d'intercalaire de feuilletage 7. Naturellement pour l'alimentation électrique, de la connectique peut sortir du dispositif 200 et même dépasser sur un ou plusieurs côtés des chants des vitrages. Alternativement, on peut utiliser deux feuillets d'intercalaires 71, 72 le feuillet central évidé n'étant pas nécessaire si l'empilement est suffisamment mince par exemple d'épaisseur d'au plus 0,2mm.

Un premier vitrage 8 ou 8' peut être teinté (gris, vert, bronze etc) et l'autre vitrage clair ou extraclair 8' ou 8. Un premier feuillet intercalaire peut être teinté (gris, vert, bronze etc) et le ou les autres clair ou extraclair. L'un des premiers vitrages 8 ou 8' peut être remplacé par une feuille plastique comme un polycarbonate ou un PMMA (notamment avec un intercalaire de feuilletage en PU).

Le chant 70 de l'intercalaire de feuilletage peut être en retrait (d'au plus 5mm par exemple) du chant 80, 80' des vitrages 8,8'.

Le dispositif 200 couvre la quasi-totalité des faces principales 81 à 82' et même ici est centré. Il y a la même largeur de PVB 7a,7b de part et d'autre du dispositif 200.

Les vitrages 8, 8' sont plans ou bombés, le dispositif 200 pouvant s'adapter à la ou aux courbures des vitrages.

Le dispositif 900 peut être une cloison ou encore un toit de véhicule. Par exemple pour un toit automobile:
- le vitrage 8 est le vitrage extérieur bombé, qui est un vitrage teinté de 3mm
- le vitrage 8' est le vitrage intérieur bombé, qui est un vitrage clair de 3mm ou plus mince
- l'intercalaire de feuilletage 8 est en PVB qui peut être acoustique notamment bicouche ou tricouche (feuillet 71 ou 72).

### EXEMPLE 10

L'exemple de réalisation n°10 représenté dans la figure 10 montre un dispositif électrocommandable à diffusion variable 101 par cristaux liquides selon l'invention.

Le dispositif 101 diffère du précédent dispositif 900 en ce que le film barrière 4 est porteur de la première électrode (ITO etc) 2, la face externe principale de cette dernière est ainsi en contact avec l'intercalaire de feuilletage (le premier substrat étant supprimé)

Lors de la fabrication, on peut utiliser trois feuillets d'intercalaire : deux feuillets pleins 71, 72 contre les faces internes 81,81' des vitrages 8,8' et un feuillet central 73 avec une ouverture pour loger l'empilement. Alternativement, on peut utiliser deux feuillets d'intercalaires 71, 72 le feuillet central évidé n'étant pas nécessaire si l'empilement est suffisamment mince par exemple d'épaisseur d'au plus 0,2mm.

Apres feuilletage l'interface entre feuillets (symbolisé en pointillés) n'est pas forcément discernable.

### EXEMPLE 11

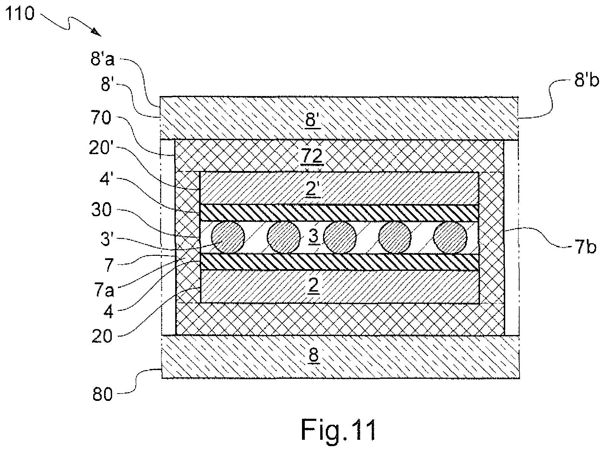

L'exemple de réalisation n°11 représenté dans la figure 11 montre un dispositif électrocommandable à diffusion variable 101 par cristaux liquides selon l'invention.

Le dispositif 110 diffère du précédent dispositif 101 en ce qu'il comprend un deuxième film barrière 4' est porteur de la deuxième électrode (ITO etc) 2', la face externe principale de cette dernière est ainsi en contact avec l'intercalaire de feuilletage (le deuxième substrat étant supprimé).

Lors de la fabrication, on peut utiliser trois feuillets d'intercalaire : deux feuillets pleins 71, 72 contre les faces internes 81,81' des vitrages 8,8' et un feuillet central 73 avec une ouverture pour loger l'empilement. Alternativement, on peut utiliser deux feuillets d'intercalaires 71, 72 le feuillet central évidé n'étant pas nécessaire si l'empilement est suffisamment mince par exemple d'épaisseur d'au plus 0,2mm.

Apres feuilletage l'interface entre feuillets (symbolisé en pointillés) n'est pas forcément discernable.

### EXEMPLE 12

L'exemple de réalisation n°12 représenté dans les figures 12 et 12' montre un dispositif électrocommandable à diffusion variable 120 par cristaux liquides selon l'invention.

Le dispositif 120 diffère du neuvième dispositif 900 en ce que l'empilement 200 couvre une portion de surface, en particulier une bande périphérique par exemple le long d'un bord longitudinal H supérieur d'un pare-brise de véhicule automobile (vitrage feuilleté bombé avec le dispositif 200), sur quasi toute la longueur du pare-brise.

Cette bande 200 est dans une zone marginale dans laquelle les critères de TL et d'absence de flou sont plus libre que dans la zone centrale ZB.

Comme montré en figure 12' (voue de coupe), la largeur 7a d'intercalaire central 73 entre le dispositif 200 et le bord longitudinal inférieur B est plus grande que la largeur 7b d'intercalaire central 73 entre le dispositif 200 et le bord longitudinal supérieur H.

En variante ou cumulativement, elle peut être présente le long d'un bord longitudinal B inférieur du pare-brise, sur toute la longueur ou une portion de longueur.

Comme montré en figure 12 (vue de face côté intérieur du véhicule), le parebrise comprend un premier cadre opaque par exemple en émail (noir ou autre) 91' à 94' sur les bords latéraux et longitudinaux de la face libre (F4) 82' du vitrage interne 8' et un deuxième cadre opaque par exemple en émail (noir ou autre) 91 à 94 sur les bords latéraux et longitudinaux de la face libre (F1) 82 du vitrage externe 8.

La tranche du dispositif 200 qui est coté bord longitudinal inférieur, et même celles côtés bords latéraux peut être entre les couches 92, 92', 93, 93', 94, 94' des cadres émail. Par exemple les connectiques et antres bandes d'amenée de courant peuvent être également masquées par ces couches 92, 92', 93, 93', 94, 94'.

## Revendications

1. Dispositif électrocommandable à diffusion variable par cristaux liquides (100, 200, 300, 400, 500, 600, 700, 800, 900, 101, 110, 120) comportant un empilement de couches dans cet ordre :
- une première électrode (2) comportant une première couche électroconductrice,
- une couche électroactive (3) contenant des cristaux liquides (3a) et des espaceurs (3'), alternant de manière réversible entre un état diffusant et un état transparent, par application d'un champ électrique alternatif, la couche active étant d'épaisseur E₀ micronique,
- une deuxième électrode (2') comportant une deuxième couche électroconductrice, la couche électroactive étant visible par transparence côté première électrode et/ou côté deuxième électrode, le dispositif électrocommandable étant tel que l'empilement comprend entre la première électrode et la couche électroactive une première couche barrière polymérique (4) transparente d'épaisseur E₁ et éventuellement entre la deuxième électrode et la couche électroactive une deuxième couche barrière polymérique (4') transparente d'épaisseur E₂, E₁ étant non nulle et d'au moins 1µm et E1+E2 étant d'au plus 40µm, la première couche barrière polymérique est porteuse de la première électrode sur une première face principale extérieure (42) orientée côté opposé à la couche électroactive ou la première électrode est sur une première face principale dite interne (11) d'un premier substrat diélectrique (1) orientée vers la couche électroactive et la deuxième couche barrière polymérique éventuelle est porteuse de la deuxième électrode sur une deuxième face principale extérieure (42') orientée côté opposé à la couche électroactive ou la deuxième électrode est sur une deuxième face principale dite interne (11') d'un deuxième substrat diélectrique (1') orientée vers la couche électroactive.

2. Dispositif électrocommandable à diffusion variable par cristaux liquides (100, 200, 300, 400, 500, 600, 700, 800, 900, 101, 110, 120) selon la revendication précédente dans lequel la première couche barrière polymérique est un premier film (4) transparent, à base de matière polymérique choisie parmi un polyester, en particulier un polyéthylène téréphtalate, un polyéthylène naphtalate, un polycarbonate, un polyoléfine, un polyuréthane, un polyamide, un polyimide ou un polymère fluoré.

3. Dispositif électrocommandable à diffusion variable par cristaux liquides (100, 200, 300, 400, 500, 900, 101, 110, 120, 130) selon l'une des revendications précédentes dans lequel la première couche barrière polymérique est un film (4), transparent, d'épaisseur E1 non nulle d'au plus 25µm et la deuxième couche polymérique est absente.

4. Dispositif électrocommandable à diffusion variable par cristaux liquides (600, 700, 800) selon l'une des revendications 1 ou 2 dans lequel la première couche barrière polymérique est un film (4), transparent, d'épaisseur non nulle E1 d'au plus 20µm et la deuxième couche polymérique (4') est un film, transparent, d'épaisseur E2 non nulle d'au plus 20µm.

5. Dispositif électrocommandable à diffusion variable par cristaux liquides selon la revendication 1 dans lequel le premier substrat diélectrique (1) est transparent et porteur de la première électrode et de la première couche barrière polymérique choisie parmi les polymères suivants : polyacrylate, polyester, polyuréthane, polyamide, polyéthylène, polyalcool, polyvinylpyrrolidone, polycarbonate, polystyrène, polymère cellulosique, latex synthétique.

6. Dispositif électrocommandable à diffusion variable par cristaux liquides (100, 200, 800, 900, 120) selon l'une des revendications 1 à 4 dans lequel le premier substrat diélectrique (1) est transparent et porteur de la première électrode qui est transparente et choisi parmi une première feuille de verre ou une première feuille polymérique transparente avec côté première face externe opposée à la première face interne une éventuelle couche anti-rayures.

7. Dispositif électrocommandable à diffusion variable par cristaux liquides (200) selon la revendication précédente dans lequel la première électrode est minérale et le dispositif comporte entre la première électrode et le premier film barrière polymérique transparent une couche d'adhésion transparente et polymérique qui est électroconductrice ou qui est diélectrique et d'épaisseur E3 d'au plus 10µm.

8. Dispositif électrocommandable à diffusion variable par cristaux liquides (500) selon l'une des revendications 1 à 7 dans lequel le premier substrat diélectrique est une première feuille de verre qui est, côté première face externe opposée à la première face interne, feuilleté via un intercalaire de feuilletage thermoplastique à une autre feuille de verre.

9. Dispositif électrocommandable à diffusion variable par cristaux liquides (300, 400, 500, 600, 700, 800, 900, 101, 110, 120) selon l'une des revendications 1 à 4 dans lequel la première couche barrière polymérique est un premier film de préférence transparent porteur de la première électrode et optionnellement la deuxième couche barrière polymérique est un deuxième film de préférence transparent porteur de la deuxième électrode.

10. Dispositif électrocommandable à diffusion variable par cristaux liquides (300, 500) selon la revendication précédente dans lequel le dispositif comporte en outre une première feuille additionnelle, transparente, polymérique ou en verre liée à la première électrode par une première couche adhésive diélectrique transparente comme une colle optique (7'), notamment à base de polyester, acrylique ou silicone ou par un intercalaire de feuilletage thermoplastique.

11. Dispositif électrocommandable à diffusion variable par cristaux liquides selon l'une des revendications précédentes dans lequel la première couche barrière polymérique est teintée notamment bleu, vert, gris ou bronze.

12. Dispositif électrocommandable à diffusion variable par cristaux liquides (900, 101, 110, 120) selon l'une des revendications précédentes, lequel comporte un vitrage feuilleté comportant :
- une première feuille de verre additionnelle (8)
- un intercalaire de feuilletage thermoplastique
- une deuxième feuille de verre additionnelle (8') ou une feuille de plastique les faces principales internes dites F2 et F3 des première et deuxième feuilles de verre additionnelles étant en regard, l'empilement étant entre les faces F2 et F3 et de préférence dans l'intercalaire de feuilletage.

13. Dispositif électrocommandable à diffusion variable par cristaux liquides (900, 101, 110, 120) selon l'une des revendications précédentes selon l'une des revendications précédentes, lequel comporte un vitrage notamment feuilleté et/ou bombé, et l'empilement (200) forme une bande notamment périphérique sur une portion d'une face principale dudit vitrage.

14. Dispositif électrocommandable à diffusion variable par cristaux liquides (900, 101, 110, 120) selon l'une des revendications précédentes, lequel comporte un vitrage feuilleté et notamment bombé, et l'empilement est entre les premier et deuxième vitrages respectivement dits vitrages extérieur et intérieur et forme une bande périphérique sur une portion supérieure du vitrage feuilleté, la tranche dite externe de l'empilement étant masqué de l'extérieur par une première couche périphérique opaque sur le vitrage extérieur, et/ou la tranche dite interne de l'empilement étant masqué de l'intérieur par une deuxième couche périphérique opaque sur le vitrage intérieur.

15. Dispositif électrocommandable à diffusion variable par cristaux liquides (900, 101, 110, 120) selon l'une des revendications 13 ou 14 dans lequel le vitrage est feuilleté et est bombé et est choisi parmi un vitrage d'un véhicule automobile ou ferroviaire ou maritime.

16. Dispositif électrocommandable à diffusion variable par cristaux liquides selon l'une des revendications 1 à 14 dans lequel le vitrage est une porte vitrée, une façade ou vitrine, une cloison, une partie vitrée de meuble urbain ou domestique et/ou fait partie d'un double ou triple vitrage.

## Patentansprüche

1. Elektrisch steuerbare Vorrichtung mit variabler Diffusion durch Flüssigkristalle (100, 200, 300, 400, 500, 600, 700, 800, 900, 101, 110, 120), umfassend einen Stapel von Schichten in dieser Reihenfolge:
- eine erste Elektrode (2), die eine erste elektrisch leitfähige Schicht umfasst,
- eine elektroaktive Schicht (3), die Flüssigkristalle (3a) und Abstandhalter (3') enthält, die durch Anlegen eines elektrischen Wechselfeldes reversibel zwischen einem lichtstreuenden Zustand und einem transparenten Zustand wechselt, wobei die aktive Schicht eine Dicke E₀ im Mikrometerbereich aufweist,
- eine zweite Elektrode (2'), die eine zweite elektrisch leitfähige Schicht umfasst,
wobei die elektroaktive Schicht durch Transparenz auf der Seite der ersten Elektrode und/oder der Seite der zweiten Elektrode sichtbar ist,
wobei die elektrisch steuerbare Vorrichtung so ausgelegt ist, dass der Stapel zwischen der ersten Elektrode und der elektroaktiven Schicht eine erste transparente Polymer-Barriereschicht (4) mit einer Dicke E₁ und wahlweise zwischen der zweiten Elektrode und der elektroaktiven Schicht eine zweite transparente Polymer-Barriereschicht (4') mit einer Dicke E₂ umfasst, wobei E₁ nicht Null und mindestens 1 µm und E1+E2 höchstens 40 µm ist,
die erste Polymer-Barriereschicht die erste Elektrode auf einer ersten äußeren Hauptfläche (42) trägt, die der elektroaktiven Schicht abgewandt ist, oder die erste Elektrode sich auf einer ersten sogenannten inneren Hauptfläche (11) eines ersten dielektrischen Substrats (1) befindet, die der elektroaktiven Schicht zugewandt ist, und die zweite Polymer-Barriereschicht, falls vorhanden, die zweite Elektrode auf einer zweiten äußeren Hauptfläche (42') trägt, die von der elektroaktiven Schicht abgewandt ist, oder die zweite Elektrode sich auf einer zweiten sogenannten inneren Hauptfläche (11') eines zweiten dielektrischen Substrats (1') befindet, die der elektroaktiven Schicht zugewandt ist.

2. Elektrisch steuerbare Vorrichtung mit variabler Diffusion durch Flüssigkristalle (100, 200, 300, 400, 500, 600, 700, 800, 900, 101, 110, 120) nach vorstehendem Anspruch, wobei die erste Polymer-Barriereschicht eine erste transparente Folie (4) auf Basis eines polymeren Materials ist, das ausgewählt ist aus einem Polyester, insbesondere einem Polyethylenterephthalat, einem Polyethylennaphthalat, einem Polycarbonat, einem Polyolefin, einem Polyurethan, einem Polyamid, einem Polyimid oder einem fluorierten Polymer.

3. Elektrisch steuerbare Vorrichtung mit variabler Diffusion durch Flüssigkristalle (100, 200, 300, 400, 500, 900, 101, 110, 120, 130) nach einem der vorstehenden Ansprüche, wobei die erste Polymer-Barriereschicht eine transparente Folie (4) mit einer Dicke E1 ist, die nicht Null und höchstens 25 µm ist, und die zweite Polymerschicht fehlt.

4. Elektrisch steuerbare Vorrichtung mit variabler Diffusion durch Flüssigkristalle (600, 700, 800) nach einem der Ansprüche 1 oder 2, wobei die erste Polymer-Barriereschicht eine transparente Folie (4) mit einer Dicke E1 von höchstens 20 µm ist und die zweite Polymerschicht (4') eine transparente Folie mit einer Dicke E2 ist, die nicht Null und höchstens 20 µm ist.

5. Elektrisch steuerbare Vorrichtung mit variabler Diffusion durch Flüssigkristalle nach Anspruch 1, wobei das erste dielektrische Substrat (1) transparent ist und die erste Elektrode und die erste Polymer-Barriereschicht trägt, die ausgewählt ist aus den folgenden Polymeren: Polyacrylat, Polyester, Polyurethan, Polyamid, Polyethylen, Polyalkohol, Polyvinylpyrrolidon, Polycarbonat, Polystyrol, Cellulosepolymer, synthetischer Latex.

6. Elektrisch steuerbare Vorrichtung mit variabler Diffusion durch Flüssigkristalle (100, 200, 800, 900, 120) nach einem der Ansprüche 1 bis 4, wobei das erste dielektrische Substrat (1) transparent ist und die erste Elektrode trägt, die transparent ist und ausgewählt ist aus einer ersten Glasplatte oder einer ersten transparenten Polymerplatte mit einer optionalen kratzfesten Schicht auf der ersten äußeren Fläche gegenüber der ersten inneren Fläche.

7. Elektrisch steuerbare Vorrichtung mit variabler Diffusion durch Flüssigkristalle (200) nach vorstehendem Anspruch, wobei die erste Elektrode mineralisch ist und die Vorrichtung zwischen der ersten Elektrode und der ersten transparenten Polymer-Barrierefolie eine transparente und polymere Haftschicht aufweist, die elektrisch leitfähig ist oder dielektrisch ist und eine Dicke E3 von höchstens 10 µm aufweist.

8. Elektrisch steuerbare Vorrichtung mit variabler Diffusion durch Flüssigkristalle (500) nach einem der Ansprüche 1 bis 7, wobei das erste dielektrische Substrat eine erste Glasplatte ist, die auf der ersten äußeren Fläche gegenüber der ersten inneren Fläche über eine thermoplastische Laminierzwischenschicht auf eine andere Glasplatte laminiert ist.

9. Elektrisch steuerbare Vorrichtung mit variabler Diffusion durch Flüssigkristalle (300, 400, 500, 600, 700, 800, 900, 101, 110, 120) nach einem der Ansprüche 1 bis 4, wobei die erste Polymer-Barriereschicht eine vorzugsweise transparente Folie ist, welche die erste Elektrode trägt, und optional die zweite Polymer-Barriereschicht eine zweite vorzugsweise transparente Folie ist, welche die zweite Elektrode trägt.

10. Elektrisch steuerbare Vorrichtung mit variabler Diffusion durch Flüssigkristalle (300, 500) nach vorstehendem Anspruch, wobei die Vorrichtung ferner eine erste zusätzliche transparente Polymer- oder Glasplatte aufweist, die mit der ersten Elektrode durch eine erste transparente dielektrische Haftschicht, wie einen optischen Klebstoff (7'), insbesondere auf Basis von Polyester, Acryl oder Silikon, oder durch eine thermoplastische Laminierzwischenschicht verbunden ist.

11. Elektrisch steuerbare Vorrichtung mit variabler Diffusion durch Flüssigkristalle nach einem der vorstehenden Ansprüche, wobei die erste Polymer-Barriereschicht insbesondere blau, grün, grau oder bronzefarben gefärbt ist.

12. Elektrisch steuerbare Vorrichtung mit variabler Diffusion durch Flüssigkristalle (900, 101, 110, 120) nach einem der vorstehenden Ansprüche, die eine laminierte Verglasung aufweist, umfassend:
- eine erste zusätzliche Glasplatte (8)
- eine thermoplastische Laminierzwischenschicht
- eine zweite zusätzliche Glasplatte (8') oder eine Kunststoffplatte
wobei die inneren Hauptflächen F2 und F3 der ersten und der zweiten zusätzlichen Glasplatte einander zugewandt sind, wobei sich der Stapel zwischen den Flächen F2 und F3 und vorzugsweise in der Laminierzwischenschicht befindet.

13. Elektrisch steuerbare Vorrichtung mit variabler Diffusion durch Flüssigkristalle (900, 101, 110, 120) nach einem der vorstehenden Ansprüche nach einem der vorstehenden Ansprüche, die eine Verglasung aufweist, die insbesondere laminiert und/oder gewölbt ist, und wobei der Stapel (200) ein insbesondere umlaufendes Band auf einem Abschnitt einer Hauptfläche der Verglasung bildet.

14. Elektrisch steuerbare Vorrichtung mit variabler Diffusion durch Flüssigkristalle (900, 101, 110, 120) nach einem der vorstehenden Ansprüche, die eine laminierte und insbesondere gewölbte Verglasung aufweist, und wobei sich der Stapel zwischen der ersten und der zweiten Verglasung bzw. der äußeren und der inneren Verglasung befindet und ein umlaufendes Band auf einem oberen Abschnitt der laminierten Verglasung bildet, wobei der sogenannte äußere Rand des Stapels von außen durch eine erste umlaufende Schicht, die auf der äußeren Verglasung undurchsichtig ist, und/oder der sogenannte innere Rand des Stapels von innen durch eine zweite umlaufende Schicht, die auf der inneren Verglasung undurchsichtig ist, abgedeckt ist.

15. Elektrisch steuerbare Vorrichtung mit variabler Diffusion durch Flüssigkristalle (900, 101, 110, 120) nach einem der Ansprüche 13 oder 14, wobei die Verglasung laminiert und gewölbt ist und aus einer Verglasung eines Kraftfahrzeugs oder eines Schienen- oder Wasserfahrzeugs ausgewählt ist.

16. Elektrisch steuerbare Vorrichtung mit variabler Diffusion durch Flüssigkristalle nach einem der Ansprüche 1 bis 14, wobei die Verglasung eine verglaste Tür, eine Fassade oder ein Schaufenster, eine Trennwand, ein verglaster Teil eines Stadt- oder Wohnmöbels ist und/oder Teil einer Doppel- oder Dreifachverglasung bildet.

## Claims

1. An electrically controllable device having a scattering which can be varied by liquid crystals (100, 200, 300, 400, 500, 600, 700, 800, 900, 101, 110, 120) comprising a stack of layers in this order:
- a first electrode (2) comprising a first electrically conductive layer,
- an electroactive layer (3) containing liquid crystals (3a) and spacers (3'), alternating reversibly between a scattering state and a transparent state, by application of an alternating electric field, the active layer having a micronic thickness To,
- a second electrode (2') comprising a second electrically conductive layer,
the electoactive layer being visible by transparency on the side of the first electrode and/or on the side of the second electrode,
said electrically controllable device being such that the stack comprises, between the first electrode and the electroactive layer, a first transparent polymeric barrier layer (4) with a thickness of T₁ and optionally, between the second electrode and the electroactive layer, a second transparent polymeric barrier layer (4') with a thickness of T₂, T₁ being nonzero and at least 1 µm, and T₁ + T₂ being at most 40 µm,
the first polymeric barrier layer carries the first electrode on a first main exterior face (42) oriented on the side opposite the electroactive layer or the first electrode is on a first main "internal" face (11) of a first dielectric substrate (1) oriented toward the electroactive layer,
and the second optional polymeric barrier layer carries the second electrode on a second main exterior face (42') oriented on the side opposite the electroactive layer or the second electrode is on a second main "internal" face (11') of a second dielectric substrate (1') oriented toward the electroactive layer.

2. The electrically controllable device having a scattering which can be varied by liquid crystals (100, 200, 300, 400, 500, 600, 700, 800, 900, 101, 110, 120) as claimed in the preceding claim, whereinthe first polymeric barrier layer is a first transparent film (4) based on polymeric material chosen from a polyester, in particular a polyethylene terephthalate or a polyethylene naphthalate, a polycarbonate, a polyolefin, a polyurethane, a polyamide, a polyimide or a fluoropolymer.

3. The electrically controllable device having a scattering which can be varied by liquid crystals (100, 200, 300, 400, 500, 900, 101, 110, 120, 130) as claimed in either of the preceding claims, wherein the first polymeric barrier layer is a transparent film (4) with a nonzero thickness T₁ of at most 25 µm and the second polymeric layer is absent.

4. The electrically controllable device having a scattering which can be varied by liquid crystals (600, 700, 800) as claimed in either of claims 1 and 2, wherein the first polymeric barrier layer is a transparent film (4) with a nonzero thickness T₁ of at most 20 µm and the second polymeric layer (4') is a transparent film with a nonzero thickness T₂ of at most 20 µm.

5. The electrically controllable device having a scattering which can be varied by liquid crystals as claimed in claim 1, wherein the first dielectric substrate (1) is transparent and carries the first electrode and the first polymeric barrier layer chosen from the following polymers: polyacrylate, polyester, polyurethane, polyamide, polyethylene, polyalcohol, polyvinylpyrrolidone, polycarbonate, polystyrene, cellulose polymer or synthetic latex.

6. The electrically controllable device having a scattering which can be varied by liquid crystals (100, 200, 800, 900, 120) as claimed in one of claims 1 to 4, wherein the first dielectric substrate (1) is transparent and carries the first electrode which is transparent and is chosen from a first glass sheet or a first transparent polymeric sheet with on the side of the first external face opposite the first internal face an optional hard coat.

7. The electrically controllable device having a scattering which can be varied by liquid crystals (200) as claimed in the preceding claim, wherein the first electrode is mineral and the device comprises, between the first electrode and the first transparent polymeric barrier film, a transparent and polymeric adhesion layer which is electrically conductive or which is dielectric and with a thickness T₃ of at most 10 µm.

8. The electrically controllable device having a scattering which can be varied by liquid crystals (500) as claimed in one of claims 1 to 7, wherein the first dielectric substrate is a first glass sheet which is, on the side of the first external face opposite the first internal face, laminated via a thermoplastic lamination interlayer with another glass sheet.

9. The electrically controllable device having a scattering which can be varied by liquid crystals (300, 400, 500, 600, 700, 800, 900, 101, 110, 120) as claimed in one of claims 1 to 4, wherein the first polymeric barrier layer is a first, preferably transparent, film carrying the first electrode and optionally the second polymeric barrier layer is a second, preferably transparent, film carrying the second electrode.

10. The electrically controllable device having a scattering which can be varied by liquid crystals (300, 500) as claimed in the preceding claim, wherein the device additionally comprises a first additional transparent sheet, polymeric or made of glass, bonded to the first electrode by a first transparent dielectric adhesive layer, such as an optically clear adhesive (7'), in particular based on polyester, acrylic or silicone, or by a thermoplastic lamination interlayer.

11. The electrically controllable device having a scattering which can be varied by liquid crystals as claimed in one of the preceding claims, wherein the first polymeric barrier layer is tinted, in particular blue, green, gray or bronze.

12. The electrically controllable device having a scattering which can be varied by liquid crystals (900, 101, 110, 120) as claimed in one of the preceding claims, wherein it comprises a laminated glazing comprising:
- a first additional glass sheet (8),
- a thermoplastic lamination interlayer,
- a second additional glass sheet (8') or a plastic sheet,
the main internal faces, known as F2 and F3, of the first and second additional glass sheets facing one another, the stack being between the faces F2 and F3 and preferably in the lamination interlayer.

13. The electrically controllable device having a scattering which can be varied by liquid crystals (900, 101, 110, 120) as claimed in one of the preceding claims, wherein it comprises a glazing, in particular a laminated and/or bent glazing, and the stack (200) forms a strip, in particular a peripheral strip, over a portion of a main face of said glazing.

14. The electrically controllable device having a scattering which can be varied by liquid crystals (900, 101, 110, 120) as claimed in one of the preceding claims, wherein it comprises a laminated and in particular bent glazing, and the stack is between the first and second glazings, respectively "exterior" and "interior" glazings, and forms a peripheral strip over an upper portion of the laminated glazing, the "external" edge face of the stack being masked from the outside by a first opaque peripheral layer on the exterior glazing, and/or the "internal" edge face of the stack being masked from the inside by a second opaque peripheral layer on the interior glazing.

15. The electrically controllable device having a scattering which can be varied by liquid crystals (900, 101, 110, 120) as claimed in either of claims 13 and 14, wherein the glazing is laminated and is bent and is chosen from a glazing of an automobile or rail or nautical vehicle.

16. The electrically controllable device having a scattering which can be varied by liquid crystals as claimed in one of claims 1 to 14, wherein the glazing is a glazed door, a shop window or display case, a partition, a glazed portion of street or household furniture and/or forms part of a double or triple glazing.
